# EUROPÄISCHE PATENTSCHRIFT

(11) **EP 3 839 859 B1**
(45) Veröffentlichungstag und Bekanntmachung des Hinweises auf die Patenterteilung: **24.06.2026**
(21) Anmeldenummer: 19217197.3
(22) Anmeldetag: 17.12.2019
(51) Int. Cl.: G06Q 20/40, G06Q 20/20, G06V 40/16, G06V 40/50, G06V 40/60, G06V 40/40, G01B 11/24

(54) **SELBSTBEDIENUNG-REGISTRIERTERMINAL, VERFAHREN UND STEUERVORRICHTUNG**
SELF-SERVICE REGISTRATION TERMINAL, METHOD AND CONTROL DEVICE
TERMINAL D'ENREGISTREMENT LIBRE-SERVICE, PROCÉDÉ ET DISPOSITIF DE COMMANDE

(43) Veröffentlichungstag der Anmeldung: 23.06.2021
(73) Patentinhaber: Diebold Nixdorf Systems GmbH, 33106 Paderborn (DE)
(72) Erfinder: WEIS, Eduard, 30102 Paderborn (DE); KNOBLOCH, Alexander, 33100 Paderborn (DE); ENGELNKEMPER, Sebastian, 33449 Langenberg (DE)

(56) Entgegenhaltungen:
- EP-A1- 3 291 162
- EP-A2- 0 991 027
- DE-A1- 102015 106 358
- DE-A1- 102015 108 330
- DE-A1- 102016 009 619
- US-A1- 2016 180 166
- US-A1- 2019 164 167
- US-A1- 2019 205 874
- US-A1- 2019 259 014
- US-A1- 2019 354 746

## Beschreibung

Verschiedene Ausführungsbeispiele betreffen ein Selbstbedienungs-Registrierterminal, ein Verfahren und eine Steuervorrichtung.

Ein Registrierterminal kann dem Kunden die Möglichkeit bieten, die gewünschten Produkte selbst zu scannen (z.B. ohne Unterstützung) oder alternativ sich beim Scannen der Produkte von einem Mitarbeiter unterstützen zu lassen. Ein solches Selbstbedienungs-Registrierterminal sorgt zwar für einen längeren Registrier- und Bezahlvorgang, dafür aber für mehr Anonymität für den Kunden, eine Verkürzung der Wartezeit in der Schlange, einen größeren Durchsatz auf die gesamte Filiale bezogen und geringere Personalkosten für den Einzelhandel. Mit einem Selbstbedienungs-Registrierterminal scannt nicht notwendigerweise ein Kassierer, sondern jeder Kunde die Barcodes der zu kaufenden Produkte selbst.

Unglücklicherweise können bei der Verwendung eines Selbstbedienungs-Registrierterminals nicht alle Vorgänge, die normalerweise der Kassierer übernimmt, problemlos automatisiert werden. Dazu gehört beispielsweise der Vorgang der Altersverifikation, bei dem überprüft werden soll, ob der Kunde das nötige Alter aufweist, um ein Produkt, dessen Verkauf einer Altersbeschränkung unterliegt, erwerben zu dürfen. Daher wird die Altersverifikation herkömmlicherweise noch immer oft von einem Mitarbeiter durchgeführt, was zwar relativ zuverlässig, allerdings langwierig und kostenintensiv ist. Ein Mechanismus zur automatisierten Altersverifikation schätzt das Alter automatisiert ein, z.B. mittels eines Algorithmus. Dieser lässt sich allerdings leicht manipulieren, z.B. mittels Schminke oder einem unnatürlichen Gesichtsausdruck. Als Alternative wird nur die Vorlage eines Ausweises verlangt, was sich ebenso manipulieren lässt, indem ein fremder Ausweis vorgelegt wird. Insbesondere ist letzteres rechtlich weitestgehend nicht anerkannt, d.h. in nur wenigen Ländern und nur für wenige Produkte, beispielsweise Zigaretten in Deutschland. Hierzu sei exemplarisch verwiesen auf die EP 3 291 162 A1 , die US 2016/180166 A1, die US 2019/205874 A1, die US 2019/2509014 A1, die EP 0 991 027 A2 und die US 2019/164167 A1. Ergänzend sei verweisen auf die DE 10 2015 108330 A1, DE 10 2015 106358 A1, und die DE 10 2016 009619 A1 und die US 2019/354746 A1, welche verschiedene Bilderfassungsprozesse betreffen.

Gemäß verschiedenen Ausführungsformen wurde anschaulich erkannt, dass der Verkauf von Waren mit Altersbeschränkung an Selbstbedienungskassen herkömmlicherweise fehleranfällig und/oder aufwändig ist. Das für die Altersbeschränkung Beschriebene kann in Analogie auch für eine andere Verkaufsbeschränkung gelten.

Die sich daraus ergebende Aufgabe wird gelöst durch die beigefügten unabhängigen Patentansprüche.

Gemäß verschiedenen Ausführungsformen wurde anschaulich erkannt, dass sich der Vorgang der Altersverifikation verbessern lässt, beispielsweise ohne gesetzliche Bestimmungen oder Datenschutzbestimmungen zu verletzen. Dazu wird anschaulich der Ausweis (z.B. optisch) ausgelesen, z.B. dessen Lichtbild und Schrift, und auf deren Grundlage eine Gesichtserkennung durchgeführt und das Alter der Person des Ausweises ermittelt. Ferner wird eine Gesichtserkennung der Person vor der Selbstbedienungskasse durchgeführt und überprüft, ob die Person des Ausweises (z.B. dessen Eigentümer) und die Person des Kunden identisch sind, d.h. ob diese auch Eigentümer des Ausweises ist. Trifft dies alles zu, kann der Verkauf der Ware mit Altersbeschränkung freigegeben werden. Beispielsweise kann so die tatsächliche Funktionsweise der Altersverifizierung leichter nachvollziehbar sein, im Gegensatz zu antrainierten Algorithmen zur Altersschätzung, und es können Fehlentscheidungen vermieden werden.

Gemäß verschiedenen Ausführungsformen werden ein Selbstbedienungs-Registrierterminal, ein Verfahren und eine Steuervorrichtung bereitgestellt, welche den Vorgang der Altersverifikation erleichtern. Beispielsweise wird eine Automatisierung der Altersverifikation erleichtert, z.B. indem ein Auslesen des exakten Alters aus einem Personalausweis erfolgt und/oder indem eine Überprüfung der Echtheit des Ausweises erfolgt anhand dessen Sicherheitsmerkmalen.

Gemäß verschiedenen Ausführungsformen kann eine Überprüfung des rechtmäßigen Besitzes durch einen biometrischen 1:1-Vergleich eines Lichtbilds (des Personalausweises) und eines Livebildes (z.B. mittels einer Kamera am Registrierterminal) erfolgen. Ferner kann eine Manipulation (beispielsweise des Livebilds) durch zuvor aufgenommene Bilder erschwert, z.B. indem Tiefeninformationen ausgewertet werden und/oder zusätzlich ein neuronales Netz verwendet wird. Eine Manipulation kann beispielsweise nur noch über eine hochwertige Dokumentenfälschung erfolgen, gegen welche auch eine manuelle Altersverifikation im Wesentlichen machtlos ist.

Es zeigen
- Figur 1: ein Verfahren gemäß verschiedenen Ausführungsformen in einem schematischen Ablaufdiagramm;
- Figur 2: ein Registrierterminal gemäß verschiedenen Ausführungsformen in einem schematischen Aufbaudiagramm;
- Figur 3: ein Registrierterminal gemäß verschiedenen Ausführungsformen in einem schematischen Kommunikationsdiagramm;
- Figur 4: ein Registrierterminal gemäß verschiedenen Ausführungsformen in einer schematischen Seitenansicht;
- Figur 5: ein Registrierterminal gemäß verschiedenen Ausführungsformen in einem Verfahren in einer schematischen Seitenansicht;
- Figur 6: ein Verfahren gemäß verschiedenen Ausführungsformen in einem schematischen Ablaufdiagramm; und
- Figur 7: ein Verfahren gemäß verschiedenen Ausführungsformen in einem schematischen Ablaufdiagramm.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. ohmsch und/oder elektrisch leitfähig, z.B. einer kommunikationsfähigen Verbindung), eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Der Begriff "Steuervorrichtung" kann als jede Art einer Logik implementierenden Entität verstanden werden, die beispielsweise eine Verschaltung und/oder einen Prozessor aufweisen kann, welche Software ausführen kann, die in einem Speichermedium, in einer Firmware oder in einer Kombination davon gespeichert ist, und darauf basierend Anweisungen ausgeben kann. Die Steuervorrichtung kann beispielsweise mittels Codesegmenten (z.B. Software) konfiguriert sein, um den Betrieb eines Systems (z.B. seines Arbeitspunkts), z.B. einer Maschine oder einer Anlage, z.B. deren Komponenten, zu steuern.

Der Begriff "Prozessor" kann als jede Art von Entität verstanden werden, die die Verarbeitung von Daten oder Signalen erlaubt. Die Daten oder Signale können beispielsweise gemäß zumindest einer (d.h. einer oder mehr als einer) spezifischen Funktion behandelt werden, die vom Prozessor ausgeführt wird. Ein Prozessor kann eine analoge Schaltung, eine digitale Schaltung, eine Mischsignalschaltung, eine Logikschaltung, einen Mikroprozessor, eine zentrale Verarbeitungseinheit (CPU), eine Grafikverarbeitungseinheit (GPU), einen digitalen Signalprozessor (DSP), eine programmierbare Gatter-Anordnung (FPGA), eine integrierte Schaltung oder eine beliebige Kombination davon aufweisen oder daraus gebildet sein. Jede andere Art der Implementierung der jeweiligen Funktionen, die nachstehend ausführlicher beschrieben werden, kann auch als Prozessor oder Logikschaltung verstanden werden. Es versteht sich, dass einer oder mehrere der hierin detailliert beschriebenen Verfahrensschritte von einem Prozessor ausgeführt (z.B. realisiert) werden können, durch eine oder mehrere spezifische Funktionen, die von dem Prozessor ausgeführt werden. Der Prozessor kann daher eingerichtet sein, eines der hierin beschriebenen Verfahren oder dessen Komponenten zur Informationsverarbeitung durchzuführen.

Gemäß verschiedenen Ausführungsformen kann ein Datenspeicher (allgemeiner auch als Speichermedium bezeichnet) ein nichtflüchtiger Datenspeicher sein. Der Datenspeicher kann beispielsweise eine Festplatte und/oder zumindest einen Halbleiterspeicher (wie z.B. Nur-Lese-Speicher, Direktzugriffsspeicher und/oder Flash-Speicher) aufweisen oder daraus gebildet sein. Der Nur-Lese-Speicher kann beispielsweise ein löschbarer programmierbarer Nur-Lese-Speicher (kann auch als EPROM bezeichnet werden) sein. Der Direktzugriffsspeicher kann ein nichtflüchtiger Direktzugriffsspeicher (kann auch als NVRAM -"non-volatile random access memory" bezeichnet werden) sein. Beispielsweise kann in dem Datenspeicher eines oder mehr als eines von Folgendem gespeichert werden: eine Datenbank (kann auch als Referenzdatenbank bezeichnet werden), ein Verarbeitungsalgorithmus; ein Kriterium; Codesegmente, die beispielsweise einen oder mehr als einen Verarbeitungsalgorithmus (vereinfacht auch als Algorithmus bezeichnet) implementieren. Die Datenbank kann einen oder mehrere Datensätze aufweisen, von denen jeder Datensatz eine Produktkennung einer Zahlungsinformation und/oder einer Verkaufsbeschränkung zuordnet. Dies kann von der Steuervorrichtung ausgelesen werden.

Im Folgenden wird sich auf Bilddaten und deren Verarbeitung bezogen. Die Bilddaten können ein digitales Abbild der Realität (z.B. des Erfassungsbereichs) zu einem Zeitpunkt des Erfassens der Bilddaten sein. Die Abbildung der Realität kann beispielsweise mittels eines Objektivs erfolgen, welches Licht auf die Oberfläche eines Bilderfassungssensors (z.B. eines Bayer-Sensors) projiziert. Das Erfassen der Bilddaten kann aufweisen, den Bilderfassungssensor auszulesen während das Licht auf dessen Oberfläche projiziert wird. Die so erhaltenen Bilddaten können zunächst im sogenannten Rohdatenformat (auch als RAW bezeichnet) sein, welches pixelweise die ausgelesenen Messwerte des Bilderfassungssensors aufweist und/oder als solche verarbeitet werden. Die Bilddaten können optional beim Verarbeiten in ein anderes Bildformat überführt sein oder werden, z.B. in eine Rastergrafik (verschieden von RAW als Rastergrafik) oder eine Vektorgrafik, so dass deren weitere Verarbeitung in diesem Bildformat erfolgt, oder können beliebig zwischen diesen umgewandelt werden. Das Überführen kann optional aufweisen, die Messwerte des Bilderfassungssensors zu interpolieren (z.B. mittels Demosaickings), z.B. um vollständige mehrfarbige Farbinformationen für jedes Pixel zu erhalten oder um weniger Speicherplatz bzw. Rechenleistung zu benötigen. Die Bilddaten können optional komprimiert (z.B. um weniger Speicherplatz bzw. Rechenleistung zu benötigen) oder unkomprimiert (z.B. um Verfälschungen zu vermeiden) sein. Das jeweilige Bildformat kann auch den Farbraum definieren, gemäß dem die Farbinformationen angegeben sind.

Der einfachste Fall ist ein Binär-Farbraum, bei dem pro Pixel ein Schwarzweiß-Wert abgespeichert wird. Bei einem etwas komplexeren Farbraum (auch als Graustufen-Farbraum bezeichnet) werden Zwischenstufen zwischen Schwarz und Weiß abgespeichert (auch als Grauwerte bezeichnet). Der Farbraum kann aber auch von mehreren (z.B. zwei oder mehr) Grundfarben aufgespannt werden, wie beispielsweise rot, grün und blau.

Sollen die Messwerte beispielsweise mehrfarbige Farbinformationen aufweisen, kann ein wellenlängensensitiver Bilderfassungssensor verwendet werden. Dessen Messwerte können beispielsweise gemäß einem Farbraum kodiert sein. Die Farbinformationen bzw. der zugrundeliegende Farbraum können daher mehrfarbig (auch als polychrom bezeichnet) oder auch einfarbig (auch als monochrom bezeichnet) sein. Die monochrome Farbinformationen kann beispielsweise nur Grauwerte aufweisen (dann auch als Grauwertinformationen bezeichnet) oder Schwarzweiß-Werte aufweisen (dann auch als Schwarzweißwertinformationen bezeichnet), welche die Intensität der erfassten Strahlung bei der Wellenlänge bzw. dem Wellenlängenbereich repräsentieren, bei welcher der monochrome Sensor sensitiv ist. Für eine visuelle Wiedergabe der Bilddaten auf einer Anzeigevorrichtung werden diese in dasjenige Bildformat überführt, das vom Bildspeicher der Grafikkarte vorgegeben ist. Die hierin beschriebenen Bilddaten werden zum einfacheren Verständnis als eine solche visuelle Wiedergabe dargestellt. Im Allgemeinen können die Bilddaten, z.B. abgelegt in einem Speichermedium, als Datei (auch als digitales Bild oder Bilddatei bezeichnet) in dem jeweiligen Bildformat vorliegen.

Den Bilddaten können ferner (z.B. alternativ oder zusätzlich zu den Farbinformationen) Tiefeninformationen (auch als 3D-Informationen bezeichnet) zugeordnet sein. Zum Erfassen der Tiefeninformationen kann eine sogenannte 3D-Kamera verwendet werden, wie später noch genauer beschrieben wird. Die Messwerte der 3D-Kamera können (z.B. pixelweise) Informationen zu einer Topografie der abgebildeten Realität (auch als Tiefeninformationen bezeichnet) aufweisen. Beispielsweise können die Tiefeninformationen angeben, welchen Abstand ein oder jedes Pixel der Kamera von einem Ort im Raum aufweist, der auf das Pixel abgebildet wird.

Die Tiefeninformationen können anschaulich den von den Bilddaten abgebildeten zwei räumlichen Dimensionen eine dritte räumliche Dimension (hierin als Tiefe bezeichnet) hinzufügen. Beispielsweise kann ein Objekt mittels der Bilddaten als Projektion auf die zweidimensionale Oberfläche des Bildsensors repräsentiert sein (auch als 2D-Bilddaten bezeichnet). Die Tiefeninformationen spannen hierzu die dritte räumliche Dimension auf. Beispielsweise können die Tiefeninformationen den Bilddaten segmentweise (d.h. für jedes Segment der Bilddaten) zugeordnete Werte (auch als Tiefenwerte bezeichnet) aufweisen, welche deren Tiefe angeben. Beispielsweise können die Tiefeninformationen den Bilddaten pixelweise (d.h. für jedes Pixel der Bilddaten) zugeordnete Tiefenwerte aufweisen, welche die Tiefe angeben.

Gemäß verschiedenen Ausführungsformen werden die Tiefeninformationen mittels einer dreidimensionalen (3D) Bilderfassung gewonnen. Die Tiefeninformationen können beispielsweise verwendet werden, um zu erkennen, ob sich ein Objekt außerhalb oder hinter (von der Bilderfassungsvorrichtung aus betrachtet) einer Referenzebene befindet. Somit kann unterschieden werden, in welchem räumlichen Abstand sich ein Objekt von der Referenzebene befindet. Beispielsweise können die Tiefeninformationen durch den gesamten Erfassungsbereich hindurch gewonnen werden, so dass anschaulich von der Seite her erkannt werden kann, in welcher räumlichen Position sich ein oder mehr als ein Objekt relativ zu der Referenzebene befindet. Die Referenzebene kann beispielsweise entlang der Gravitationsrichtung ausgerichtet sein, wenn eine oder mehr als eine Perspektive der Bilderfassungsvorrichtung quer zu der Gravitationsrichtung verläuft. Allgemeiner gesprochen kann die Referenzebene entlang einer Richtung verlaufen, die quer zu der oder jeder Perspektive der Bilderfassungsvorrichtung ist. Beispielsweise kann auch von schräg oben her ein Erfassen der Bilddaten erfolgen.

Gemäß verschiedenen Ausführungsformen kann die Bilderfassungsvorrichtung Bilddaten des Erfassungsbereichs aus mehreren optischen Perspektiven (z.B. mittels mehrerer Objektive bereitgestellt) bereitstellen, welche Tiefeninformationen des Erfassungsbereichs repräsentieren (z.B. stereoskopisch). Zum Ermitteln der Tiefeninformationen können die Bilddaten, welche aus unterschiedlichen Perspektiven (z.B. mittels mehrerer Objektive) erfasst werden, einander überlagert werden, z.B. unter Berücksichtigung einer relativen räumlichen Lage (Position und/oder Ausrichtung) der Objektive zueinander. Eine Kamera kann einen (optischen) Bilderfassungssensor aufweisen und zumindest ein dem Bilderfassungssensor zugeordnetes Objektiv (auch als Linsenanordnung bezeichnet). Die Linsenanordnung einer plenoptischen Kamera kann auch ein Gitter aus mehreren Mikrolinsen aufweisen. Beispielsweise kann die Bilderfassungsvorrichtung (z.B. RealSense F200, INTEL R200, Intel RealSense D415, Intel RealSense D435 und/oder Intel SR300) einen RGB-Bilderfassungssensor und/oder einen 3D-Bilderfassungssensor aufweisen.

Ein Bilderfassungssensor (auch als Bildsensor bezeichnet) ist vom Typ des optischen Sensors und kann einen oder mehrere photoelektrisch aktive Bereiche (kann auch als Pixel bezeichnet werden) aufweisen, welche z.B. in Antwort auf eine elektromagnetische Strahlung (z.B. Licht, z.B. sichtbares Licht) ein elektrisches Signal erzeugen und/oder modifizieren. Der Bilderfassungssensor kann beispielsweise ein CCD-Sensor (charge-coupled device Sensor) und/oder einen aktiven Pixelsensor (kann auch als CMOS-Sensor bezeichnet werden) aufweisen oder daraus gebildet sein. Optional kann ein Bilderfassungssensor wellenlängensensitiv eingerichtet sein (z.B. zum Erfassen von Farbinformationen), z.B. mittels mehrerer Farbfilter (z.B. in Gitterform), und so zwischen verschiedenen Wellenlängen unterscheiden.

Die Tiefeninformationen können quantifiziert sein, z.B. unter Angabe der Tiefe als Wert (auch als Tiefenwert bezeichnet), kodiert sein oder selbst mittels Bilddaten bereitgestellt sein, z.B. indem aus einer anderen Perspektive gleichzeitig erfasste Bilddaten (z.B. separat voneinander oder einander überlagert) zugeordnet werden. Die mehreren gleichzeitig erfassten Perspektiven können beispielsweise einander überlagert werden, um die Tiefeninformationen zu quantifizieren. Jeder Tiefenwert der Tiefeninformationen kann dann beispielsweise zu einer Abweichung zwischen den mehreren gleichzeitig erfassten Perspektiven korrespondieren.

Die Bilddaten werden erfindungsgemäß unter Verwendung der Tiefeninformationen segmentiert werden (auch als 3D-basierte Segmentierung bezeichnet), indem die Bilddaten in Segmente (z.B. Pixel) zweier Typen unterteilt werden, abhängig davon, ob die den Segmenten zugeordneten Tiefenwerte ein Kriterium erfüllen oder nicht, und die Tiefenwerte der Segmente eines ersten Typs das Kriterium erfüllen und die Tiefenwerte der Segmente eines zweiten Typs das Kriterium nicht erfüllen. Optional können mehr als zwei Typen verwendet werden, wenn beispielsweise mehr als ein Kriterium verwendet wird. Die Grenzen zwischen den Segmenten der Bilddaten verlaufen entlang derjenigen Tiefenwerte, die im Wesentlichen dem Kriterium entsprechen.

Durch eine 3D-basierte Segmentierung der Bilddaten und einer Lebenderkennung durch ein künstliches neuronales Netz (kNN) kann die Altersverifikation vereinfacht, verbessert und/oder abgesichert werden. Erfindungsgemäß werden der Lebenderkennung nur diejenigen Segmente der Bilddaten zugeführt werden, deren Tiefenwerte ein Kriterium erfüllen , dass heißt möglichst nah an dem Registrierterminal sind. So kann zum einen der Fall des Betrugs verhindert werden und zum anderen der Gesamtprozess auf Abweichungen vom Normalverhalten analysiert werden. Damit kann der gesamte Registriervorgang (auch als Checkout-Prozess bezeichnet) optional nach seiner Verdächtigkeit bewerten werden und/oder optional ein Mitarbeiter informiert werden.

Aufgrund der Vorverarbeitung der Bilddaten durch eine tiefenbasierte Segmentierung sowie eine gezielte Optimierung der Architektur des kNN auf die gegebene Problemstellung können im Vergleich zu herkömmlichen Mechanismen sehr hohe Erkennungsraten erreicht werden. Alternativ oder zusätzlich können aufgrund der Vorverarbeitung der Bilddaten durch eine tiefenbasierte Segmentierung (auch als Tiefensegmentieren bezeichnet) sowie eine gezielte Optimierung der Architektur des kNN auf die gegebene Problemstellung im Vergleich zu herkömmlichen Mechanismen eine kosteneffektivere Hardware ermöglichen. Anschaulich ist weniger Rechenleistung nötig, um hohe Erkennungsraten zu erreichen.

Gemäß verschiedenen Ausführungsformen kann ein Registrierterminal eingerichtet sein, die Produkte, die ein Kunde erwerben will, zu registrieren, z.B. mittels Scannens der Produkte an einem Scanner (z.B. einen Barcodescanner) zu erfassen. Ferner kann das Registrierterminal ein (z.B. digitales) Kassensystem aufweisen (beispielsweise eine Selbstbedienungskasse oder einen Kassierer-Arbeitsplatz aufweisend), welches eingerichtet ist, einen Bezahlprozess durchzuführen. Der Bezahlprozess kann beispielsweise aufweisen, dass der Kunde die zu erwerbenden Produkte auch bezahlt. Das Kassensystem kann zumindest eines von Folgendem aufweisen: einen Bildschirm (z.B. einen berührungsempfindlichen Bildschirm), einen Drucker (z.B. zum Ausdrucken einer Rechnung und/oder eines Etiketts), eine (z.B. programmierbare) Kassentastatur (kann auch Teil des berührungsempfindlichen Bildschirms sein), ein Zahlungsmittel-Terminal zum Annehmen eines Zahlungsmittels (z.B. Bargeld oder eine Debitkarte). Das Zahlungsmittel-Terminal kann beispielsweise ein Elektronisch-Zahlungsmittel-Terminal (kann auch als EC-Terminal bezeichnet werden, "EC" - electronic cash, z.B. zum Auslesen einer Debitkarte und/oder einer Kreditkarte) sein. Beispielsweise kann das Registrierterminal ein (z.B. digitales) Kassensystem aufweisen, welches eingerichtet ist, einen oder mehrere Kassensystem-Prozesse durchzuführen, wie beispielsweise eine Registriersitzung. Eine Registriersitzung kann beispielsweise einen Berechnungsprozess, einen Inventarprozess und/oder einen Registrierprozess aufweisen.

Bei einem Selbstbedienungs-Registrierterminal können das Kassensystem und der Scanner auf derselben Seite (z.B. einer Säule) des Registrierterminals angeordnet sein, so dass diese von einer Position aus bedient werden können. Bei einem Nicht-Selbstbedienungs-Registrierterminal (auch als Kassierer-Registrierterminal bezeichnet) können das Kassensystem und der Scanner von unterschiedlichen Seiten aus bedienbar sein, z.B. der Scanner von einem Kassierer-Arbeitsplatz aus.

Hierin wird sich hinsichtlich der Implementierung des Verfahrens unter anderem auf ein Selbstbedienungs-Registrierterminal bezogen. Es kann verstanden werden, dass das Beschriebene in Analogie für ein Nicht-Selbstbedienungs-Registrierterminal oder ein anders Terminal (z.B. Selbstbedienungs-Terminal) gelten kann und andersherum.

Das Terminal kann beispielsweise ein Selbstbedienungskiosk oder ein Verkaufs- oder Ausgabeautomat (z.B. für Casino, Apotheke, Kino etc.) oder ein anderer automatisierter Kiosk sein. Das Terminal muss nicht zwangsläufig eingerichtet sein zum Erfassen einer Produktkennung, sondern kann diese auch aus einem Speicher auslesen, z.B. gemäß einer Benutzereingabe. Die Benutzereingabe kann anschaulich angeben, welches (beispielsweise von dem Terminal vorgehaltene) Produkt der Kunde erwerben möchte. Dazu kann das Terminal beispielsweise ein Lager aufweisen zum Lagern eines oder mehr als eines physischen Produkts (das der Kunde beispielsweise per Benutzereingabe erwerben kann). Das Terminal kann die Produktkennung beispielsweise gemäß der Benutzereingabe ermitteln und/oder das Produkt entsprechend auswerfen, insofern der Bezahlvorgang-Prozess freigegeben und/oder abgeschlossen wurde. Die Benutzereingabe kann beispielsweise einen Tastendruck oder eine sonstige physische Einwirkung eines Benutzers auf das Terminal aufweisen, z.B. auch einen Münzeinwurf (wenn das Terminal z.B. nur gleiche Produkte vorhält).

Im Folgenden wird sich auf Produkte (z.B. Waren, kann auch als Artikel bezeichnet werden) als Objekte bezogen. Das Beschriebene kann in Analogie auch für andere Objekte gelten, die beispielsweise in einem Transportbehälter transportiert werden können. Bei dem Produkt kann es sich im Allgemeinen um ein physisches Produkt aber auch um ein virtuelles Produkt handeln.

Im Folgenden wird unter anderem auf den Prozess einer Gesichtserkennung Bezug genommen. Eine Gesichtserkennung kann das Ermitteln sichtbarer Merkmale im Bereich des frontalen Kopfes (auch als Gesicht bezeichnet) aufweisen, z.B. deren der Ausprägung (z.B. Form und/oder Größe), relative räumlichen Parameter (z.B. Position, Abstand und/oder Ausrichtung) und/oder deren Oberflächentextur, oder Ähnliches. Beispiele für sichtbare Merkmale weisen auf: Augen, Nase, Ohren, Mund, Konturen, Hautunebenheiten (wie beispielsweise Falten), usw.

In einer wenig komplexen Implementierung kann die Gesichtserkennung auf Grundlage einer zweidimensionalen Vermessung der Bilddaten erfolgen, zum Beispiel zum Ermitteln von räumlichen Parametern (z.B. Position, Abstand und/oder Ausrichtung) der Merkmale. Um die Genauigkeit, mit der die Gesichtserkennung erfolgt, zu vergrößern, können weitere Parameter ermittelt werden, wie deren Ausprägung und/oder Textur. In Analogie dazu kann auch eine dreidimensionale Vermessung von Bilddaten erfolgen. Dazu können die Bilddaten beispielsweise Tiefeninformationen aufweisen, welche der Gesichtserkennung zugeführt werden. Beispielsweise kann eine Gesichtserkennung, die eine dreidimensionale Vermessung durchführt, inhärent eine Lebenderkennung durchführen.

Als Resultat der Gesichtserkennung kann ein Satz von Merkmalen (vereinfacht auch als Gesichtsmerkmale bezeichnet) erhalten werden, der abgespeichert und/oder weiterverarbeitet werden kann. Jede Gesichtserkennung kann einen solchen Satz von Merkmalen ergeben, der beispielsweise mit einem anderen Satz von Merkmalen verglichen werden kann.

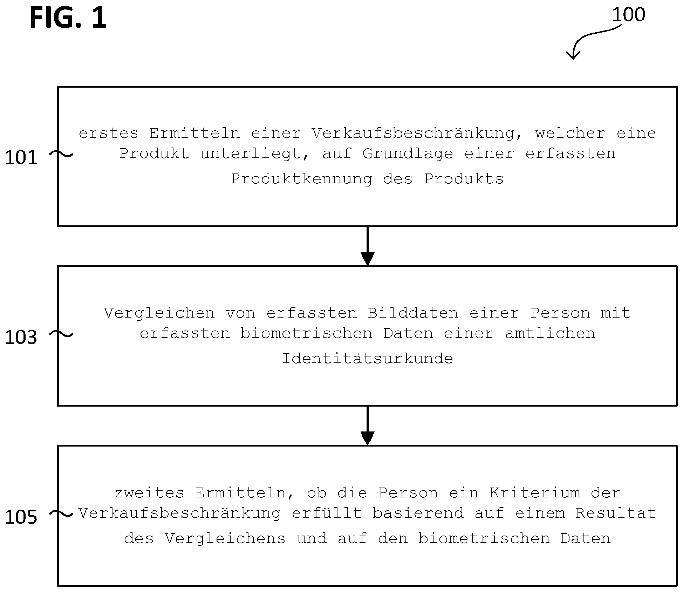

**Fig.1** veranschaulicht ein Verfahren 100 gemäß verschiedenen Ausführungsformen in einem schematischen Ablaufdiagramm.

Im Folgenden wird Bezug genommen auf das Erfassen und Verarbeiten von Bilddaten der Person. Allgemeiner gesprochen können alternativ oder zusätzlich zu den Bilddaten der Person auch andere biometrische Daten der Person, anhand der Person selbst erfasst und/oder verarbeitet werden. Es kann verstanden werden, dass das für die Bilddaten der Person Beschriebene in Analogie für die anderen biometrischen Daten (z.B. zu biometrischen Identifikationsmerkmalen) gelten kann, welche anhand der Person erfasst werden, beispielsweise für: Gesichtsmerkmale (z.B. auf Grundlage von Bilddaten des Gesichts ermittelt) der Person, ein Fingerlinienbild der Person, ein genetischer Fingerabdruck der Person, Regenbogenhaut-Merkmale (d.h. Merkmale der Iris) der Person, Augenhintergrund-Merkmale (d.h. Merkmale der Retina) der Person, eine Körpergröße der Person, Nagelbettmuster der Person, Unterschrift-Merkmale der Person, einem Stimmprofil der Person (z.B. eine Sprecherauthentifizierung ermöglichend), usw.

Das Verfahren 100 kann aufweisen, in 101, ein erstes Ermitteln einer Verkaufsbeschränkung, welcher ein Produkt unterliegt, auf Grundlage einer erfassten Produktkennung des Produkts; in 103, Vergleichen von erfassten Bilddaten einer Person (z.B. einem Benutzer eines Registrierterminals) mit erfassten biometrischen Daten einer amtlichen Identitätsurkunde; und in 105, zweites Ermitteln, ob die Person ein Kriterium der Verkaufsbeschränkung erfüllt basierend auf einem Resultat des Vergleichens und auf den biometrischen Daten. Das zweite Ermitteln kann ein Beschränkungsvergleichen 903 aufweisen, wie später noch genauer beschrieben wird.

Die biometrischen Daten (z.B. zu biometrischen Identifikationsmerkmalen) der Person können mittels eines entsprechenden biometrischen Sensors unmittelbar erfasst werden und/oder anhand von dem Sensor bereitgestellten Sensordaten ermittelt werden (beispielsweise bei Gesichtsmerkmalen). Dazu passend können die anhand der Identifikationsurkunde erfassten biometrischen Daten (z.B. zu biometrischen Identifikationsmerkmalen) ausgewählt werden. Beispielsweise können die biometrischen Daten (z.B. zu biometrischen Identifikationsmerkmalen) der Person und der Identifikationsurkunde vom gleichen Typ oder zumindest vergleichbar sein.

Das Verfahren 100 kann optional aufweisen, eine Gültigkeit der Identitätsurkunde zu ermitteln, wobei das Kriterium der Verkaufsbeschränkung beispielsweise nicht erfüllt ist, wenn ermittelt wird, dass die Identitätsurkunde ungültig (z.B. abgelaufen oder gefälscht) ist. Das Ermitteln der Gültigkeit der Identitätsurkunde kann aufweisen, ein oder mehr als ein Sicherheitsmerkmal der Identitätsurkunde zu erfassen und/oder ein Ablaufdatum der Identitätsurkunde zu erfassen. Beispiele für ein Sicherheitsmerkmal weisen auf: ein nur im Infrarotlicht sichtbares Sicherheitsmerkmal (das z.B. durch Infrarotlicht zum Leuchten angeregt wird), ein nur im Ultraviolettlicht sichtbares Sicherheitsmerkmal (das z.B. durch Ultraviolettlicht zum Leuchten angeregt wird), ein Sicherheitsmerkmal, welches nur in einem nicht-sichtbaren Wellenlängenbereich emittiert (zum Beispiel oberhalb von 780 nm und oder unterhalb von 380 nm).

Das Ermitteln der Gültigkeit der Identitätsurkunde kann beispielsweise mittels eines optischen Erfassens erfolgen. In analoger Weise kann das Erfassen der biometrischen Daten der Identitätsurkunde oder auch anderer Daten der Identitätsurkunde (z.B. deren Ablaufdatum) mittels eines optischen Erfassens erfolgen, wie später noch genauer beschrieben wird.

Hierin wird sich auf das optische Erfassen der Identitätsurkunde bezogen, so dass Bilddaten der Identitätsurkunde erhalten und verarbeitet werden, anhand welcher beispielsweise die biometrischen Daten und/oder die Gültigkeit der Identitätsurkunde ermittelt werden können. Das für das optische Erfassen Beschriebene kann in Analogie für ein elektrisches Erfassen gelten, so dass die entsprechenden Informationen (z.B. Bilddaten, biometrische Daten und/oder ein Nachweis der Gültigkeit) aus einem Speichermedium der Identitätsurkunde ausgelesen werden.

Beispielsweise kann das Erfassen der biometrischen Daten aufweisen, die Identitätsurkunde (z.B. mittels einer Bilderfassungsvorrichtung) optisch zu erfassen, wie nachfolgend genauer beschrieben wird. Das optische Erfassen der Identitätsurkunde kann beispielsweise einseitig oder beidseitig (z.B. gleichzeitig von beiden Seiten) erfolgen. Das einseitige Erfassen ist einfacher zu implementieren. Das zweiseitige Erfassen erhöht die Anzahl der erfassten Daten und damit die Zuverlässigkeit.

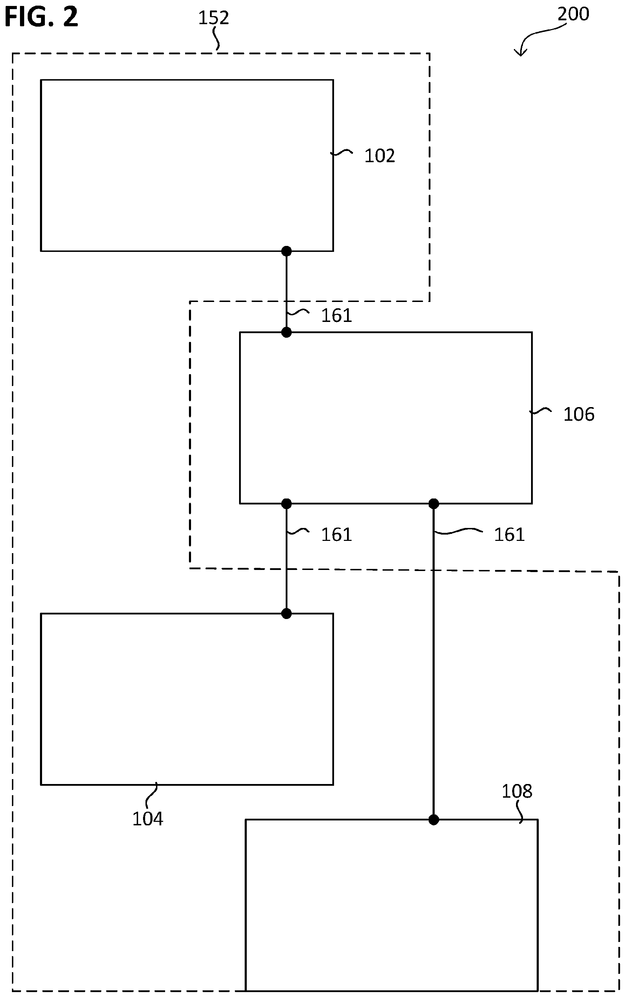

**Fig.2** veranschaulicht ein Registrierterminal 200 gemäß verschiedenen Ausführungsformen in einem schematischen Aufbaudiagramm. Das Registrierterminal 200 kann eine Erfassungsvorrichtung 152 (auch als Datenerfassungsvorrichtung bezeichnet) und eine Steuervorrichtung 106 aufweisen. Die Steuervorrichtung 106 kann eingerichtet sein, das Verfahren 100 zu implementieren, wie im Folgenden exemplarisch beschrieben wird.

Die Erfassungsvorrichtung 152 kann beispielsweise als Komponenten eine Bilderfassungsvorrichtung 102, eine Urkundenerfassungsvorrichtung 108 und/oder eine Produkterfassungsvorrichtung 104 aufweisen.

Die Steuervorrichtung 106 kann mit der Erfassungsvorrichtung 152, z.B. mit jeder ihrer Komponenten 102, 104, 108 (wenn vorhanden), kommunikativ 161 gekoppelt sein, z.B. mittels eines Feldbus-Kommunikationsnetzwerks 161.

Die Erfassungsvorrichtung 152 kann eingerichtet sein, Daten verschiedener Typen (auch als Datentyp bezeichnet) zu erfassen, wie beispielsweise: Bilddaten einer Person an dem Selbstbedienungs-Registrierterminal (beispielsweise als ersten Datentyp); biometrische Daten einer amtlichen Identitätsurkunde (beispielsweise als zweiten Datentyp), wenn die Identitätsurkunde der Erfassungsvorrichtung präsentiert wird; und/oder eine Produktkennung eines Produkts (beispielsweise als dritten Datentyp), wenn das Produkt der Erfassungsvorrichtung präsentiert wird. Zum Erfassen der Daten kann die Erfassungsvorrichtung 152 einen oder mehr als einen Sensor aufweisen, von denen jeder Sensor eingerichtet ist, Daten eines oder mehr als eines Datentyps zu erfassen.

Die Erfassungsvorrichtung 152 und/oder die Steuervorrichtung 106 können eine entsprechende Infrastruktur (z.B. Prozessor, Speichermedium und/oder Bussystem aufweisend) oder dergleichen aufweisen, welche eine Messkette implementiert. Die Messkette kann eingerichtet sein, die entsprechenden Sensoren (z.B. Kamera, Scanner, usw.) anzusteuern, deren Messgröße als Eingangsgröße zu verarbeiten und darauf basierend die Bilddaten bzw. Produktkennung als Ausgangsgröße bereitzustellen.

Zum einfacheren Verständnis wird im Folgenden unter anderem auf eine Erfassungsvorrichtung 152 Bezug genommen, deren Komponenten separate Infrastrukturen (z.B. Sensoren bzw. Messketten) bereitstellen können, z.B. jeweils zum Erfassen der Produktkennung, zum Erfassen der Bilddaten der Person und zum Erfassen der biometrischen Daten der amtlichen Identitätsurkunde. Im Allgemeinen müssen die Steuervorrichtung 106 und die Erfassungsvorrichtung 152 bzw. deren Komponenten 102, 104, 108 nicht notwendigerweise separat voneinander sein bzw. separate Infrastrukturen aufweisen. Beispielsweise können mehrere informationsverarbeitende Funktionen auch als Komponenten derselben Software (auch als Anwendung bezeichnet) bereitgestellt werden, die von einem oder mehr als einem Prozessor des Registrierterminals 200 ausgeführt wird. Es können selbstverständlich auch mehrere Anwendungen und/oder mehrere Prozessoren (z.B. ein Verbund dieser, z.B. auch über ein Netzwerk miteinander verbunden) verwendet werden, welche die informationsverarbeitenden Funktionen der Erfassungsvorrichtung 152 (z.B. deren Komponenten) und der Steuervorrichtung 106 bereitstellen. In analoger Weise können mehrere datenerfassende Funktionen als Komponenten derselben Messkette bereitgestellt sein. Beispielsweise kann derselbe Sensor zum Erfassen mehrere der Datentypen eingerichtet sein.

Das für die separaten Sensoren bzw. Messketten Beschriebene kann daher in Analogie gelten, wenn eine oder mehr als eine der datenerfassenden und/oder informationsverarbeitenden Funktionen (z.B. zweier oder mehr als zweier dieser Komponenten) gemeinsam mittels derselben Infrastruktur (z.B. einem Sensor und/oder einer Messkette) oder ineinandergreifender Infrastrukturen bereitgestellt sind.

Beispiele für mögliche Konfigurationen sind im Folgenden erläutert.

In einer ersten beispielhaften Konfiguration weist die Erfassungsvorrichtung 152 auf: eine Bilderfassungsvorrichtung 102 mit einem Bildsensor (z.B. CCD-Sensor), welcher eingerichtet ist, die Bilddaten der Person zu erfassen, eine Urkundenerfassungsvorrichtung 108 mit einem zweiten Sensor, welcher eingerichtet ist, die biometrischen Daten zu erfassen, und eine Produkterfassungsvorrichtung 104 mit einem dritten Sensor, welcher eingerichtet ist, die Produktkennung zu erfassen. Dies erreicht, separate Sensoren/Infrastrukturen und damit eine größere Variabilität, beispielsweise bei der Wartung bzw. Aufrüstung.

In einer Abwandlung der ersten beispielhaften Konfiguration kann als Sensor der Urkundenerfassungsvorrichtung 108 ein oder der Bildsensor verwendet werden, welcher eingerichtet ist, Bilddaten der Identitätsurkunde zu erfassen, wobei die Urkundenerfassungsvorrichtung 108 eingerichtet ist, aus diesen die biometrischen Daten zu extrahieren (z.B. mittels Mustererkennung, wie beispielsweise Gesichtserkennung und/oder Texterkennung). Dies erreicht, dass in gegebenenfalls vorhandene hoheitliche Befugnisse zum Auslesen der biometrischen Daten nicht eingegriffen wird (z.B. gesetzliche Bestimmungen).

In einer Abwandlung der ersten beispielhaften Konfiguration kann die Urkundenerfassungsvorrichtung 108 alternativ oder zusätzlich zu dem Bildsensor einen Chipkartenleser aufweisen, welcher eingerichtet ist, auf der Identitätsurkunde (z.B. deren Speichermedium) abgespeicherte biometrische Daten auszulesen. Dies erreicht, dass die biometrischen Daten digital und mit hoher Qualität erhalten werden.

In einer zweiten beispielhaften Konfiguration weist die Erfassungsvorrichtung 152 auf: eine Bilderfassungsvorrichtung mit dem Bildsensor, welcher eingerichtet ist, die Bilddaten der Person und die Bilddaten der Identitätsurkunde zu erfassen, wobei die Erfassungsvorrichtung 152 eingerichtet ist, aus letzteren die biometrischen Daten zu extrahieren, und eine Produkterfassungsvorrichtung 104 mit dem dritten Sensor zum Erfassen der Produktkennung.

In einer Abwandlung der ersten und/oder zweiten beispielhaften Konfiguration kann als Sensor der Produkterfassungsvorrichtung 104 ein oder der Bildsensor verwendet werden, welcher eingerichtet ist, Bilddaten des Produkts zu erfassen, wobei die Produkterfassungsvorrichtung 104 eingerichtet ist, aus diesen die Produktkennung zu extrahieren.

In einer Abwandlung der ersten und/oder zweiten beispielhaften Konfiguration kann die Produkterfassungsvorrichtung alternativ oder zusätzlich zu dem Bildsensor eine Maschinencodelesevorrichtung (z.B. ein Barcodeleser) aufweisen, welche eingerichtet ist, einen maschinenlesbaren Code des Produkts zu erfassen (z.B. optisch), wobei die Produkterfassungsvorrichtung eingerichtet ist, und aus diesen die Produktkennung zu extrahieren.

In einer dritten beispielhaften Konfiguration weist die Erfassungsvorrichtung 152 nur einen Bildsensor auf, welcher eingerichtet ist, die Bilddaten der Person zu erfassen, die Bilddaten der Identitätsurkunde zu erfassen (wobei die Erfassungsvorrichtung 152 aus letzteren die biometrischen Daten extrahiert), und die Bilddaten eine Produkterfassungsvorrichtung 104 zu erfassen (wobei die Erfassungsvorrichtung 152 aus letzteren die Produktkennung extrahiert).

Andere beispielhafte Konfigurationen werden im Folgenden beschrieben.

Beispielsweise kann die Identitätsurkunde eine oder mehr als eine maschinenlesbare Zone (z.B. gemäß Spezifikation 9303 der Internationalen Zivilluftfahrtorganisation für Ausweisdokumente) aufweisen, welche optisch erfasst wird (z.B. Bilddaten davon). Anhand der oder jeder optisch erfassten maschinenlesbare Zone können beispielsweise die biometrischen Daten der Identitätsurkunde ermittelt werden, z.B. ein Geburtsdatum. Mit anderen Worten kann die Identitätsurkunde selbst einen maschinenlesbaren Code aufweisen, welcher mittels ein oder der Maschinencodelesevorrichtung erfasst werden kann zum Bereitstellen der biometrischen Daten (z.B. mittels optischer Texterkennung).

Der oder jeder Bildsensor der Erfassungsvorrichtung 152 bzw. deren Bilderfassungsvorrichtung 102 kann beispielsweise einen Erfassungsbereich vor dem Registrierterminal 200 definieren, welcher (und optional darin angeordneten Objekte bzw. Personen) von den erfassten Bilddaten repräsentiert wird. Der oder jeder Bildsensor der Erfassungsvorrichtung 152 bzw. deren Bilderfassungsvorrichtung 102 können eingerichtet sein, die Bilddaten (z.B. im Rohdatenformat oder einer vorbearbeiteten Version des Rohdatenformats), z.B. pixelbasierte Bilddaten (auch als Rastergrafik bezeichnet), zuzuführen. Die oder jede Bilderfassungsvorrichtung 102 kann beispielsweise eine oder mehr als eine Kamera aufweisen, welche einen oder mehr als einen Bildsensor aufweist.

Die Erfassungsvorrichtung 152 (z.B. deren Produkterfassungsvorrichtung 104) kann eingerichtet sein, der Steuervorrichtung 106 eine von ihr erfasste Produktkennung zuzuführen. Die Produktkennung kann beispielsweise einem Produkt oder dessen Typ eindeutig zugeordnet sein. Die Produktkennung kann beispielsweise auf Grundlage eines optischen Merkmals (auch als Kennungsmerkmal bezeichnet) des Produkts, welches erfasst wird, ermittelt werden. Das Kennungsmerkmal (z.B. ein Muster) kann einen visuellen Code aufweisen, der die Produktkennung repräsentiert, z.B. einen Binärcode oder Ähnliches.

Beispielsweise kann das Kennungsmerkmal einen Barcode oder einen anderen maschinenlesbaren Code aufweisen.

Mittels der Erfassungsvorrichtung 152 (z.B. deren Produkterfassungsvorrichtung 104) kann ein produktweises Ermitteln der einzelnen Produktkennungen erfolgen (auch als Kennungserfassen bezeichnet). Der Bereich, in dem die Erfassungsvorrichtung 152 das Produkt erfassen kann, kann beispielsweise eine Produkterfassungszone sein. Das Kennungserfassen kann aufweisen, dass ein zu erfassendes Produkt der Erfassungsvorrichtung 152 präsentiert wird. Das Präsentieren kann aufweisen, dass das zu erfassende Produkt in der Produkterfassungszone angeordnet wird und dessen Kennungsmerkmal in Richtung der Erfassungsvorrichtung 152 ausgerichtet wird.

Beispielsweise kann die Erfassungsvorrichtung 152 (z.B. deren Produkterfassungsvorrichtung 104) eine optische Erfassungsvorrichtung, eine RFID-Scanvorrichtung (Radiofrequenz-Identifikation) oder dergleichen aufweisen zum Erfassen der Produktkennung. Die optische Erfassungsvorrichtung kann beispielsweise eine Barcode-Scanvorrichtung, eine Bilderfassungsvorrichtung oder eine Bildabtastvorrichtung aufweisen. Die Barcode-Scanvorrichtung kann entsprechende Sensoren zur Implementierung einer Scanfunktionalität beinhalten, wie beispielsweise einen oder mehr als einen Infrarotsensor, eine oder mehr als eine Kamera und dergleichen. Die Produkterfassungsvorrichtung 104 kann beispielsweise eingerichtet sein, den maschinenlesbaren Code zu erfassen und verarbeiten zu können, um daraus die Produktkennung zu extrahieren.

Die Erfassungsvorrichtung 152 (z.B. deren Bilderfassungsvorrichtung 102) kann eingerichtet sein, Bilddaten der Person zu ermitteln, wobei die Bilddaten Farbinformationen und/oder Tiefeninformationen aufweisen können. Dazu kann die Bilderfassungsvorrichtung 102 eine 3D-Kamera und/oder eine RGB-Kamera aufweisen, wie nachfolgend noch genauer beschrieben wird.

Wie vorstehend beschrieben, kann eine oder mehr als eine Kamera verwendet werden, um die Bilddaten der Identifikationsurkunde und die Bilddaten der Person vor dem Registrierterminal zu erfassen. Diese Bilddaten können beispielsweise nacheinander mittels derselben Kamera erfasst werden, z.B. indem die Person erst sich selbst und danach die Identifikationsurkunde präsentiert oder andersherum. Diese Bilddaten können aber ebenso gleichzeitig mittels derselben Kamera erfasst werden, z.B. indem die Person die Identifikationsurkunde neben sich hält, wenn sie sich selbst präsentiert.

Ein leicht zu verstehendes Beispiel zur Implementierung des Verfahrens 100 kann aufweisen, dass Daten des Personalausweises und ein Live-Bild der Person (z.B. nacheinander oder gleichzeitig) erfasst werden. Optional kann eine Aufforderung an die Person ausgegeben werden, in die Kamera zu schauen (alternativ oder zusätzlich kann aber auch dauerhaft, z.B. ohne Wissen der Person, gefilmt werden). Optional kann eine Schablone als Positionierungsvorlage eingeblendet werden.

Die Kamera zum Erfassen der Bilddaten der Person kann beispielsweise auch in oder an der Urkundenerfassungsvorrichtung 108, z.B. dem Chipkartenleser, angeordnet sein, z.B. derart, dass ein automatischer Blickkontakt beim Präsentieren der Identifikationsurkunde erfolgt.

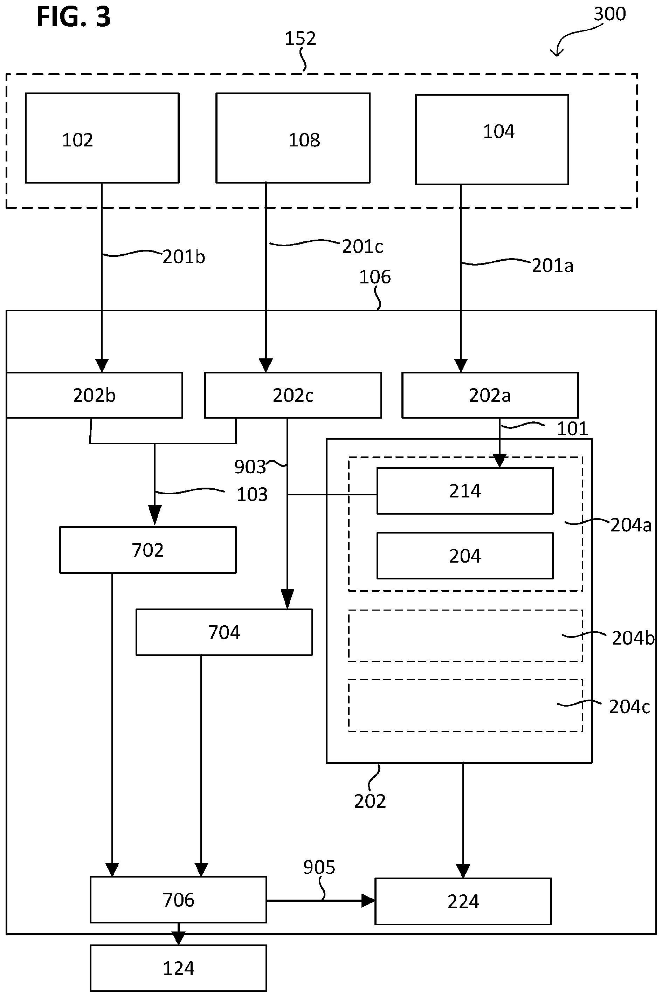

**Fig.3** veranschaulicht ein Registrierterminal 200 gemäß verschiedenen Ausführungsformen 300 in einem schematischen Kommunikationsdiagramm. Optional kann das Registrierterminal 200 eine Informationsausgabevorrichtung 124 aufweisen, welche eine oder mehr als eine Anzeigevorrichtung und/oder einen oder mehr als einen Lautsprecher aufweisen kann.

Die Erfassungsvorrichtung 152 (z.B. deren Bilderfassungsvorrichtung 102) kann eingerichtet sein, der Steuervorrichtung 106 erfasste Bilddaten 202b zuzuführen 201b (z.B. im Rohdatenformat oder einer vorbearbeiteten Version des Rohdatenformats), z.B. als Einzelbild oder kontinuierlich als Sequenz. Die Erfassungsvorrichtung 152 (z.B. deren Produkterfassungsvorrichtung 104) kann eingerichtet sein, der Steuervorrichtung 106 eine erfasste Produktkennung 202a zuzuführen 201a. Die Erfassungsvorrichtung 152 (z.B. deren Urkundenerfassungsvorrichtung 108) kann eingerichtet sein, der Steuervorrichtung 106 die biometrischen Daten 202c zuzuführen 201c.

Beispiele für die biometrischen Daten können folgende Informationen aufweisen: Gesichtsmerkmale (z.B. Bilddaten des Gesichts), Fingerlinienbild, genetischer Fingerabdruck, Regenbogenhaut-Merkmale (d.h. Merkmale der Iris), Augenhintergrund-Merkmale (d.h. Merkmale der Retina), Körpergröße, Nagelbettmuster, Unterschrift-Merkmale, Geburtsdatum, Geburtsort, Name, Herkunft, Staatsangehörigkeit. Es kann verstanden werden, dass auch andere biometrische Daten verwendet werden können.

Die Steuervorrichtung 106 kann eingerichtet sein zum Ermitteln 101 einer Verkaufsbeschränkung 214 basierend auf der Produktkennung 202a. Die Verkaufsbeschränkung 214 kann anschaulich die Menge der Personen, welche das Produkt erwerben dürfen, beschränken, z.B. nur auf diejenigen Personen, die ein Kriterium der Verkaufsbeschränkung 214 erfüllen. Mit anderen Worten kann die Verkaufsbeschränkung 214 ein Kriterium (z.B. eine oder mehr als eine Voraussetzung aufweisend) definieren. Erfüllt eine Person das Kriterium, ist diese beispielsweise berechtigt, das Produkt zu erwerben.

Die Verkaufsbeschränkung kann beispielsweise eine hoheitliche Anordnung sein, z.B. mittels eines Gesetzes normiert.

Im Folgenden wird zum vereinfachten Verständnis auf eine Altersbeschränkung Bezug genommen, d.h. dass die Person das Kriterium erfüllt, wenn diese ein bestimmtes Alter aufweist. Das für die Altersbeschränkung Beschriebene kann in Analogie auch für eine andere Verkaufsbeschränkung gelten, z.B. eine Beschränkung hinsichtlich der Geschäftsfähigkeit der Person, hinsichtlich eines (z.B. rechtlichen) Status der Person (z.B. eines Studierendenstatus), hinsichtlich einer Befähigung/Sachkunde der Person (z.B. bei einem Fischereischein), hinsichtlich eines Gesundheitsnachweises der Person, oder hinsichtlich einer hoheitlich erteilten Erlaubnis der Person (z.B. einer Fahrerlaubnis oder einer Sprengberechtigung).

Die Steuervorrichtung 106 kann ferner eingerichtet sein, in 101, zum Ermitteln von Zahlungsinformationen 204 basierend auf der Produktkennung 202a (auch als Zahlungsinformation-Ermitteln bezeichnet). Die Zahlungsinformationen 204 können anschaulich repräsentieren, welcher Preis für das entsprechende Produkt mit der Produktkennung 202a aufgerufen wird. Beispielsweise kann dazu die erfasste Produktkennung 202a mit einer Datenbank abgeglichen werden.

Beispielsweise kann die Steuervorrichtung 106 eingerichtet sein, eine Registriersitzung 202 zu starten, z.B. in Antwort auf ein ermitteltes Ereignis (auch als Sitzungsstartereignis bezeichnet), welches repräsentiert, dass eine Selbstbedienungsregistrierung erfolgen soll. Beispiele für das Sitzungsstartereignis können aufweisen, dass ein Nutzer vor dem Registrierterminal 200 steht und/oder eine entsprechende Eingabe an diesem vornimmt, dass der Erfassungsvorrichtung 152 ein Produkt präsentiert wird, und/oder dass eine vorherige Registriersitzung beendet wurde.

In ähnlicher Weise kann die Steuervorrichtung 106 eingerichtet sein, die Registriersitzung 202 zu beenden, z.B. in Antwort auf ein ermitteltes Ereignis (auch als Sitzungsendereignis bezeichnet), welches repräsentiert, dass eine Abrechnung der Selbstbedienungsregistrierung erfolgen soll. Beispiele für das Sitzungsendereignis können aufweisen, dass ein Nutzer eine entsprechende Eingabe an dem Registrierterminal 200 vornimmt, dass eine Bankkarte oder ein anderes Zahlungsmittel von dem Registrierterminal 200 erfasst wurde, und/oder dass ein vordefinierter Zeitraum abgelaufen ist, seit dem das letzte Produkt erfasst wurde.

Zum Beenden der Registriersitzung 202 kann die Steuervorrichtung 106 eingerichtet sein, eine Abrechnungsinformation 224 zu ermitteln und mittels einer Informationsausgabevorrichtung des Registrierterminals 200 auszugeben. Die während einer Registriersitzung 202 ermittelten Zahlungsinformationen 204 können beispielsweise aggregiert werden und das Ergebnis des Aggregierens der Abrechnungsinformation 224 hinzugefügt werden. Die Abrechnungsinformation 224 kann anschaulich angeben, welche zu zahlende Summe die registrierten Produkte ergeben. Die Abrechnungsinformation 224 kann optional weitere Informationen aufweisen, wie beispielsweise der Anteil an Steuern, eine Liste der erfassten Produkte, eine Einzelaufstellung der erfassten Produkte, oder Ähnliches.

Zum Beenden der Registriersitzung 202 kann ferner ein Bezahlprozess initiiert werden, mittels dessen die zu zahlende Summe gemäß der Abrechnungsinformation 224 beglichen werden kann. Das Begleichen kann beispielsweise mittels des Zahlungsmittel-Terminals (nicht dargestellt) erfolgen.

Um den Abgleich zwischen der Person, welche das Produkt kaufen möchte, und der Verkaufsbeschränkung durchzuführen, können die erfassten biometrischen Daten zumindest zwei verschiedene Informationen (auch als erste biometrische Information und zweite biometrische Information bezeichnet) aufweisen, wie nachfolgend genauer beschrieben wird.

Die erste biometrische Information (z.B. eine Bildinformation aufweisend oder daraus gebildet) kann beispielsweise eingerichtet sein, mit den Bilddaten verglichen zu werden. Die zweite biometrische Information kann beispielsweise eingerichtet sein, mit dem Kriterium verglichen zu werden. Mit anderen Worten können miteinander vergleichbare Informationen/Daten verwendet werden.

Die Steuervorrichtung 106 kann ferner eingerichtet sein, zum Vergleichen 103 der Bilddaten 202b mit den biometrischen Daten 202c (z.B. deren erste biometrische Information). Das Resultat 702 des Vergleichens 103 (vereinfacht auch als biometrisches Vergleichen 103 bezeichnet) kann beispielsweise sein, dass die Bilddaten 202b der Person und die biometrischen Daten 202c (z.B. die erste biometrische Information) übereinstimmen (als positives Resultat) oder nicht übereinstimmen (als negatives Resultat). Optional können zwischen den zwei Resultaten des Übereinstimmens als positives Resultat und des Nicht-Übereinstimmens als negatives Resultat ein oder mehr als ein Zwischenschritt (z.B. beliebig viele Zwischenschritte) verwendet werden, welcher eine teilweise Übereinstimmung repräsentiert. Beispielsweise kann das Resultat 702 des Vergleichens 103 einen Grad an Übereinstimmung aufweisen, wobei das Resultat des vollständigen Übereinstimmens einem Grad von 100% entspricht und das Resultat des Nicht-Übereinstimmens einem Grad von 0% entspricht. Übersteigt der Grad an Übereinstimmung einen abgespeicherten Schwellenwert, kann beispielsweise das positive Resultat ausgegeben werden.

Anschaulich kann das biometrische Vergleichen 103 beispielsweise einen Personenabgleich bereitstellen, bei dem überprüft wird, ob die Identitätsurkunde zu der Person, von welcher die Bilddaten 202b erfasst wurden, gehört, z.B. ob diese auch Eigentümer der Identitätsurkunde ist.

Die Steuervorrichtung 106 kann ferner eingerichtet sein, zum Vergleichen 903 der Verkaufsbeschränkung 214 mit den biometrischen Daten 202c (z.B. deren zweiter biometrischer Information). Das Resultat 704 des Vergleichens 903 (auch als Beschränkungsvergleichen 903 bezeichnet) kann beispielsweise sein, dass die biometrischen Daten 202c (z.B. deren zweite biometrische Information) der Person das Kriterium der Verkaufsbeschränkung erfüllt (als positives Resultat) oder nicht erfüllt (als negatives Resultat). Optional können zwischen den zwei Resultaten des Erfüllens als positives Resultat und des Nichterfüllens als negatives Resultat ein oder mehr als ein Zwischenschritt (z.B. beliebig viele Zwischenschritte) verwendet werden, welcher eine teilweise Erfüllung des Kriteriums repräsentiert. Beispielsweise kann das Resultat 704 des Vergleichens 903 einen Grad an Erfüllung aufweisen, wobei das Resultat des vollständigen Erfüllens einem Grad von 100% entspricht und das Resultat des Nichterfüllens einem Grad von 0% entspricht. Die Zwischenschritte ermöglichen es, komplexere Verkaufsbeschränkungen zu behandeln, die beispielsweise als Kriterium einen Satz von Voraussetzungen zum Erwerb des Produkts definieren. Übersteigt der Grad an Erfüllung einen abgespeicherten Schwellenwert, kann beispielsweise das positive Resultat ausgegeben werden.

Anschaulich kann das Beschränkungsvergleichen 903 beispielsweise einen Abgleich bereitstellen, bei dem überprüft wird, ob die Person, von welcher die Bilddaten 202b erfasst wurden, die Voraussetzungen zum Erwerb des Produkts auch erfüllt.

Ergeben sowohl das Beschränkungsvergleichen 903 als auch das biometrische Vergleichen 103 ein positives Resultat, kann als Ergebnis 706 ermittelt werden, dass die Person (von welcher die Bilddaten 202b erfasst wurden) das Kriterium der Verkaufsbeschränkung erfüllt. Ergibt das Beschränkungsvergleichen 903 und/oder das biometrische Vergleichen 103 ein negatives Resultat, kann als Ergebnis 706 ermittelt werden, dass die Person (von welcher die Bilddaten 202b erfasst wurden) das Kriterium der Verkaufsbeschränkung nicht erfüllt.

Es kann verstanden werden, dass die Steuervorrichtung 106 optional eingerichtet sein kann, die Person aufzufordern, sich selbst (z.B. ihr Gesicht) und/oder die Identitätsurkunde der Erfassungsvorrichtung 152 zu präsentieren, z.B. mittels einer Informationsausgabevorrichtung des Registrierterminals 200. Beispielsweise kann die Person so oft wie möglich aufgefordert werden, sich selbst bzw. die Identitätsurkunde zu präsentieren, wenn ein negatives Resultat 702, 704 erhalten wird.

Optional kann die Steuervorrichtung 106 eingerichtet sein, ein Signal 905 auszugeben, welches beispielsweise eingerichtet ist (z.B. mittels Instruktionen), in die Registriersitzung 202 (oder einen anderen Prozess des Registrierterminals 200) einzugreifen und/oder eine oder mehr als eine Komponente des Registrierterminals 200 anzusteuern, z.B. um eine wahrnehmbare Information auszugeben, die das Ergebnis 706 repräsentieren.

Wird ermittelt, dass die Person das Kriterium der Verkaufsbeschränkung nicht erfüllt, kann mittels des Signals 905 die Registriersitzung 202 in einen Wartezustand versetzt werden, ein Alarm ausgegeben werden und/oder der Bezahlvorgang blockiert werden. Damit kann beispielsweise gehemmt werden, dass die Person das Produkt erwirbt.

Wird ermittelt, dass die Person das Kriterium der Verkaufsbeschränkung erfüllt, kann mittels des Signals 905 die Registriersitzung 202 fortgesetzt werden, kann der Alarm aufgehoben werden und/oder kann der Bezahlvorgang freigegeben werden. Damit kann beispielsweise ermöglicht werden, dass die Person das Produkt erwirbt. Das Freigeben des Bezahlvorgangs kann aufweisen, dass beispielsweise auch (z.B. eine reservierte Buchung) abgebucht wird.

Optional kann (z.B. je nach Sicherheitsstufe) die Registriersitzung 202 automatisch in einen Wartezustand versetzt werden bzw. der Bezahlvorgang blockiert werden, in Antwort darauf, dass das Vorliegen der Verkaufsbeschränkung ermittelt wird. Dann kann, das Signal 905 (z.B. nur dann) ausgegeben werden, um die Blockade bzw. den Wartezustand aufzuheben.

Wird die Registriersitzung 202 allerdings nicht automatisch in den Wartezustand versetzt bzw. der Bezahlvorgang blockiert, kann in Antwort darauf, dass die Person das Kriterium der Verkaufsbeschränkung nicht erfüllt, das Signal ausgegeben werden, um die Blockade bzw. den Wartezustand zu bewirken.

Wird der Alarm ausgegeben, welcher beispielsweise ein wahrnehmbar Alarm oder auch ein stiller Alarm sein kann, kann es erforderlich sein, dass dieser mittels einer Authentifizierung eines Mitarbeiters quittiert wird, z.B. um die Blockade bzw. den Wartezustand aufzuheben.

Optional kann die Steuervorrichtung 106 eingerichtet sein, mittels der Informationsausgabevorrichtung 124 eine Rückmeldung zum dem Erfassen der Bilddaten der Person und/oder der biometrischen Daten der amtlichen Identitätsurkunde auszugeben. Beispielsweise können die erfassten Bilddaten unmittelbar mittels der Informationsausgabevorrichtung 124 ausgegeben werden. Dies erleichtert es, verwertbare Bilddaten zu erfassen. Optional kann den wiedergegebenen Bilddaten zusätzlich eine Positionierungsvorlage (beispielsweise eine Kontur, eine Schablone oder ein Rahmen) überlagert werden, welche eine einzunehmende Position der Person angibt.

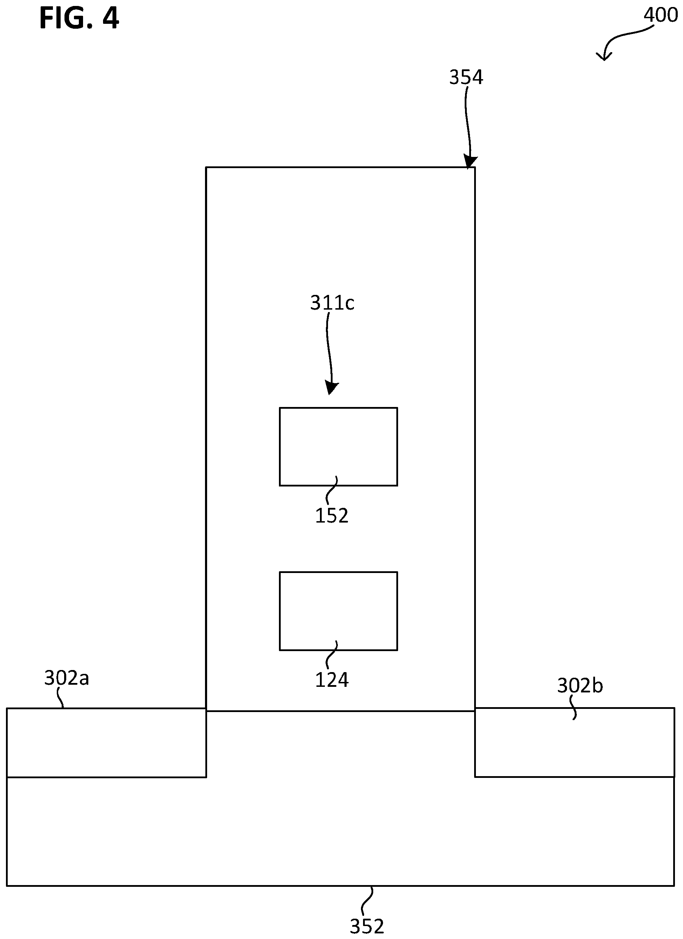

**Fig.4** veranschaulicht ein Registrierterminal 200 gemäß verschiedenen Ausführungsformen 400 in einer schematischen Seitenansicht, in welchen das Registrierterminal 200 beispielsweise als Selbstbedienungs-Registrierterminal 200 (auch als SB-Registrierterminal bezeichnet) eingerichtet ist.

Im Allgemeinen kann das Registrierterminal 200 ein Tragwerk 352 aufweisen, mittels welcher verschiedenen Komponenten des Registrierterminals 200 getragen werden, beispielsweise eine oder mehr als eine Ablagevorrichtung 302a, 302b, die Erfassungsvorrichtung 152 (z.B. deren die Produkterfassungsvorrichtung 104 und/oder Bilderfassungsvorrichtung 102), die Steuervorrichtung (nicht dargestellt), usw. Das Tragwerk 352 kann beispielsweise ein Gestell und ein daran befestigtes Gehäuse aufweisen, wobei das Gehäuse die sensiblen Komponenten des Registrierterminals 200 einhaust. Das Tragwerk 352 kann beispielsweise eine Basis aufweisen, mit welcher das Tragwerk 352 auf einem Untergrund steht und einen vertikal erstreckten Abschnitt 354 (anschaulich auch als Säule bezeichnet), welcher die erhöht angebrachten Komponenten, z.B. die Bilderfassungsvorrichtung 102 und die Produkterfassungsvorrichtung 104, trägt.

Die Erfassungsvorrichtung 152 (z.B. deren Bilderfassungsvorrichtung 102) kann eingerichtet sein, Bilddaten, z.B. einer Person vor dem Registrierterminal 200, zu erfassen. Dazu kann die Erfassungsvorrichtung 152 eine oder mehr als eine Kamera aufweisen. Beispielsweise kann die Erfassungsvorrichtung 152 eingerichtet sein, Bilddaten zu erzeugen, die Tiefeninformationen (z.B. der Person) aufweisen.

Zum Ermitteln der Tiefeninformationen kann die Erfassungsvorrichtung 152 beispielsweise eine oder mehr als eine 3D-Kamera aufweisen (auch als 3-Dimension-Kamera bezeichnet). Eine 3D-Kamera kann im Allgemeinen eingerichtet sein, Bilddaten zu erfassen, welche die Tiefeninformationen aufweisen.

Beispiele für eine 3D-Kamera weisen auf: eine plenoptische Kamera (auch als Lichtfeldkamera bezeichnet), eine stereoskopische Kamera (kurz auch als Stereokamera bezeichnet), eine Kamera mit Triangulationssystem, eine TOF-Kamera (Laufzeit-Kamera), eine Kamera mit Interferenzsystem. Eine Stereokamera ist hierbei eine besonders kostengünstige 3D-Kamera, welche leichter zu implementieren ist. Ebenso ist eine Stereokamera robuster gegenüber reflektierenden Oberflächen und benötigt keinen Laser, was das Gesundheitsrisiko für Personen im öffentlichen Raum reduziert.

Die TOF-Kamera kann beispielsweise eingerichtet sein, den Erfassungsbereich vor dem Registrierterminal 200 mittels eines Lichtpulses auszuleuchten und für jeden Bildpunkt eine Zeit (die sogenannte Laufzeit) zu erfassen, welche der Lichtpuls wieder zurück braucht. Im Allgemeinen kann allerdings auch ein Signal anderen Typs (z.B. Schall) verwendet werden, um eine räumliche Verteilung der Laufzeit des Signals zu messen (z.B. ein Ultraschall-Laufzeitverfahren). Dies ermöglicht es beispielsweise, eine noch einfacher aufgebaute Kamera zu verwenden oder im Vergleich zu einem Lichtpuls, je nach zugrundeliegender Technologie, eine größere Bildauflösung bereitzustellen.

Es kann alternativ oder zusätzlich auch ein anderer Mechanismus verwendet werden, um die Tiefeninformationen bereitzustellen. Beispielsweise kann die Kamera eingerichtet sein, einen variablen Fokus (Autofokus) zum Ermitteln der Tiefeninformationen zu verwenden. Der Fokus kann allerdings auch auf ein bewegliches Objekt (z.B. Produkt und/oder Hand) gerichtet werden, so dass anhand der Fokusposition der Abstand zwischen der Kamera und dem Objekt als Tiefeninformation ermittelt werden kann. Alternativ oder zusätzlich kann das Ermitteln der Tiefeninformationen auf Grundlage einer Kantenkontrastmessung und/oder eines Phasenvergleichs erfolgen.

Die oder jede Ablagevorrichtung 302b, 302a kann derart eingerichtet sein, dass auf dieser ein oder mehr als ein Produkt abgelegt werden kann. Dazu kann eine Ablagevorrichtung 302b, 302a beispielsweise ein Ablageregal, einen Ablagehaken für Taschen und/oder einen Ablagetisch aufweisen. Optional kann die oder jede Ablagevorrichtung 302b, 302a eine Waage aufweisen, welche eingerichtet ist, ein Gewicht der auf der Ablagevorrichtung abgelegten Produkte zu erfassen.

Optional kann das Registrierterminal 200 die Informationsausgabevorrichtung 124 aufweisen. Die Informationsausgabevorrichtung 124 kann beispielsweise eingerichtet sein, eine vom Menschen wahrnehmbare (z.B. hörbare oder sichtbare) Information auszugeben, z.B. mittels einer Anzeigevorrichtung. Die Information kann beispielsweise eine Aufforderung und/oder eine Hilfestellung (z.B. für den Benutzer) aufweisen.

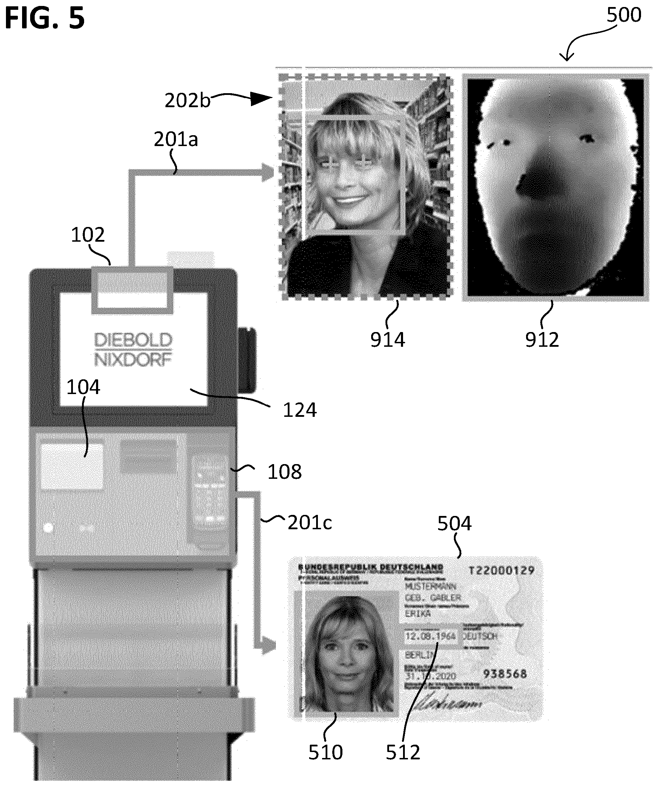

**Fig.5** veranschaulicht ein Registrierterminal 200 gemäß verschiedenen Ausführungsformen 500 in dem Verfahren 100 in einer schematischen Seitenansicht.

Im Folgenden wird zum einfacheren Verständnis auf einen Ausweis 504 als Identitätsurkunde Bezug genommen. Das für den Ausweis 504 Beschriebene kann in Analogie auch für eine andere Identitätsurkunde gelten, beispielsweise einen Führerschein, einen Staatsbürgerschaftsnachweis, einen Sozialversicherungsausweis, einen Fischereischein, einen Befähigungsschein (z.B. für den Umgang mit explosionsgefährlichen Stoffen), einen Pass oder Ähnliches.

Ferner wird zum einfacheren Verständnis auf ein Lichtbild 510 (d.h. ein Foto) als erste biometrische Information Bezug genommen. Das für das Lichtbild 510 Beschriebene kann in Analogie auch für eine andere biometrische Information gelten, z.B. eine mittels Mustererkennung erfasste biometrische Information. Ferner wird zum einfacheren Verständnis auf ein Geburtsdatum (d.h. eine Datumsangabe) als zweite biometrische Information 512 Bezug genommen. Das für das Geburtsdatum Beschriebene kann in Analogie auch für eine andere biometrische Information gelten, z.B. eine mittels Texterkennung erfasste biometrische Information.

Die Urkundenerfassungsvorrichtung 108 kann beispielsweise mittels des Zahlungsmittel-Terminals bereitgestellt sein oder werden oder separat davon.

Die mittels der Erfassungsvorrichtung 152 erfassten Bilddaten 202b können Farbbilddaten 914 und/oder Tiefenbilddaten 912 aufweisen. Die Farbbilddaten 914 können eine Pixelmatrix mit (monochromen oder polychromen) Farbinformationen aufweisen, wobei die Farbinformationen als Wert jedes Pixels dessen Farbwert angeben. Die Tiefenbilddaten 912 können eine Pixelmatrix mit Tiefeninformationen aufweisen, wobei die Tiefeninformationen als Wert jedes Pixels dessen Tiefenwert angeben.

Die Tiefenbilddaten 912 und die Farbbilddaten 914 können mittels derselben Kamera oder mittels separater (z.B. getrennt voneinander) Kameras erfasst werden. Beispielsweise kann eine 3D-Kamera die Tiefenbilddaten 912 ermitteln und eine RGB-Kamera kann die Farbbilddaten 914 ermitteln.

Die Tiefenbilddaten 912 können beispielsweise mittels einer Stereokamera als 3D-Kamera bereitgestellt sein oder werden. Eine Stereokamera kann mehrere (z.B. zwei) nebeneinander angeordnet Objektive aufweisen, welche auf den Erfassungsbereich vor dem Registrierterminal 200 gerichtet sind. Die mehreren Objektive können eingerichtet sein, den Erfassungsbereich auf einen oder mehr als einen Bilderfassungssensor der Erfassungsvorrichtung 152 abzubilden. Der Bilderfassungssensor kann beispielsweise infrarotsensitiv sein, d.h., Infrarotstrahlung erfassen.

Mittels der Stereokamera werden anschaulich Bilddaten 202b erfasst, die mehrere Perspektiven der Person zur selben Zeit repräsentieren (auch als stereoskopische Bilddaten bezeichnet), d.h. die die Person aus verschiedenen Richtungen und/oder von verschiedenen Orten aus betrachtet repräsentieren. Die Belichtungssteuerung und/oder die Schärfeneinstellung der Objektive können dazu beispielsweise miteinander gekoppelt sein.

Die Tiefeninformationen können auf Grundlage der stereoskopischen Bilddaten der Person ermittelt werden. Beispielsweise können die verschiedenen Perspektiven der stereoskopischen Bilddaten einander überlagert und daraus die Tiefeninformationen abgeleitet werden. Das für die stereoskopische Kamera Beschriebene kann in Analogie auch für eine anders eingerichtete Erfassungsvorrichtung 152 gelten, welche einen anderen Mechanismus implementiert, um die Tiefeninformationen bereitzustellen.

Im Allgemeinen können die Tiefeninformationen 912 eine Information aufweisen, welche mehrere Segmente der Bilddaten in eine räumliche Beziehung zueinander und/oder zu einem Referenzobjekt setzt. Dem entsprechenden Bilddatensegment kann jeweils ein Tiefenwert zugeordnet sein, welcher die räumliche Beziehung repräsentiert. Als Bilddatensegment können beispielsweise einzelne Pixel (d.h. die Tiefeninformation 912 kann pixelweise aufgelöst sein) oder mehrere Pixeln (die sogenannte Pixelgruppe) verwendet werden. Das Referenzobjekt kann beispielsweise die Erfassungsvorrichtung 152 aufweisen oder daraus gebildet sein. Beispielsweise können die Tiefeninformationen pixelweise einen Abstand von dem Referenzobjekt als Tiefenwert angeben.

Das biometrische Vergleichen 103 kann aufweisen, eine erste Gesichtserkennung auf Grundlage der erfassten Bilddaten 202b der Person, z.B. der Tiefenbilddaten 912 und/oder der Farbbilddaten 914, durchzuführen.

Optional kann die erste Gesichtserkennung aufweisen, dass eine Lebenderkennung durchgeführt wird. Die Lebenderkennung kann anschaulich ermitteln, ob die Bilddaten 202b eine lebendige Person repräsentieren oder ein unlebendiges Objekt. Dies kann es beispielsweise ermöglichen, den Betrugsversuch durch ein Foto der Person aufzudecken.

Die Lebenderkennung kann beispielsweise aufweisen, auf Grundlage der Tiefeninformationen zu ermitteln, ob es sich um eine reale Person (z.B. deren Gesicht) handelt, oder nur um die optische Wiedergabe der Person handelt (z.B. mittels eines Fotos). Es kann allerdings auch eine andere Form der Lebenderkennung implementiert werden, die nicht notwendigerweise die Tiefeninformationen verwendet. Die Lebenderkennung kann beispielsweise ebenso auf Grundlage einer Sequenz von Farbbilddaten 914 (z.B. einem Video) erfolgen, indem zum Beispiel ermittelt wird, wie und ob sich die Person, die von den Bilddaten 202b erfasst wird, bewegt. Beispielsweise kann die Veränderung von Gesichtszügen erfasst werden, wenn die Person lebendig ist. Ebenso kann der Zeitraum vor und oder nach dem Erfassen der Bilddaten die dem biometrischen Vergleichen 103 zugeführt werden, erfolgen, um zu ermitteln ob die Person lebendig ist.

Andere Beispiele für die Lebenderkennung weisen auf Aufforderung zum sequenziellen Blinzeln und dessen Erfassung (auch als Blinzeltest bezeichnet), Aufforderung zu sequenzieller Neigung des Kopfes in verschiedene Richtungen und dessen Erfassung (auch als Neigetest bezeichnet), Sensoren zur Erfassung mikroskopischer unbewusster muskulärer Kontraktionen in bestimmten Gesichtsbereichen mit Hilfe von Beleuchtung und Erfassung außerhalb des sichtbaren Spektrums (auch als Zuckungstest bezeichnet); Erfassung der Augenbewegung nach Aufforderung zum Folgen eines Punktes auf dem Bildschirm; Extrahieren eines biometrischen Merkmals und verifiziertem Blutfluss in den Venen auf Basis einer Finger- oder Handvenenanalyse.

Allerdings können der Blinzeltest und der Neigetest aus Gründen der Benutzerfreundlichkeit und vor allem der angestrebten Beschleunigung des Vorganges für das gegebene Problem hinderlich sein. Darüber hinaus erfordern der der Blinzeltest und der Neigetest komplexe Instruktionen an den Benutzer. Der Zuckungstest wird beispielsweise an Grenzkontrollstationen (z.B. am Flughafen) eingesetzt und ist damit etabliert und robust. Allerdings kann der Zuckungstest höhere Kosten bei der Implementierung verursachen oder Probleme aufgrund der Baugröße.

Der Plausibilitätscheck mit Hilfe der Tiefeninformationen erfordert hingegen keinerlei zusätzliche Aktion seitens des Benutzers, ist kostengünstig und bezogen auf das Umfeld sehr robust.

Kann beispielsweise nicht ermittelt werden, dass die Person, deren Bilddaten 202b erfasst wurden, lebendig ist, kann ein negatives Resultat des biometrischen Vergleichens 103 ausgegeben werden.

Das biometrische Vergleichen 103 kann aufweisen, eine zweite Gesichtserkennung auf Grundlage von Bilddaten des Ausweises 504 durchzuführen, z.B. auf Grundlage des Lichtbildes 510 des Ausweises 504. Dazu kann der Ausweis beispielsweise mit der Kamera oder einer zusätzlichen Kamera erfasst werden. Dies hat beispielsweise den Vorteil, dass auch Ausweise verarbeitet werden können, die keinen Datenspeicher aufweisen. Dies hat alternativ oder zusätzlich den Vorteil, dass der Datenspeicher des Ausweises nicht ausgelesen werden muss, so dass nicht in hoheitliches Recht eingegriffen werden muss. Beispielsweise kann es, je nach vorherrschender Rechtssituation, nicht hoheitlichen Institutionen verboten sein, die biometrischen Daten eines Ausweises 504 ohne Genehmigung auszulesen. Optional können die Bilddaten des Ausweises 504 die Vorderseite und/oder Rückseite des Ausweises repräsentieren.

Das biometrische Vergleichen 103 kann ferner aufweisen, das Resultat der ersten Gesichtserkennung (vereinfacht auch als erste Gesichtsmerkmale bezeichnet) und das Resultat der zweiten Gesichtserkennung (vereinfacht auch als zweite Gesichtsmerkmale bezeichnet) miteinander zu vergleichen, zum Beispiel auf Übereinstimmung zu überprüfen. Das Resultat 702 des biometrischen Vergleichens 103 kann beispielsweise sein, dass die ersten Gesichtsmerkmale und die zweiten Gesichtsmerkmale übereinstimmen (als positives Resultat) oder nicht übereinstimmen (als negatives Resultat). Optional können zwischen den zwei Resultaten des Übereinstimmens als positives Resultat und des Nicht-Übereinstimmens als negatives Resultat ein oder mehr als ein Zwischenschritt (z.B. beliebig viele Zwischenschritte) verwendet werden, welcher eine teilweise Übereinstimmung repräsentiert. Beispielsweise kann das Resultat einen Grad an Übereinstimmung der Gesichtsmerkmale aufweisen, wobei das Resultat des vollständigen Übereinstimmens einem Grad von 100% entspricht und das Resultat des Nicht-Übereinstimmens einem Grad von 0% entspricht. Übersteigt der Grad an Übereinstimmung der Gesichtsmerkmale einen abgespeicherten Schwellenwert, kann beispielsweise das positive Resultat ausgegeben werden.

In einem leicht zu verstehenden Beispiel kann eine Live-Gesichtserkennung erfolgen, beispielsweise mittels einer Intel RealSense Kamera als Bilderfassungsvorrichtung 102. Diese Bilderfassungsvorrichtung 102 kann beispielsweise Gesicht-Tiefeninformationen 912 und Gesicht-Farbinformationen 914 erfassen, welche dem biometrischen Vergleichen 103 zugeführt werden können. Anschaulich können die Gesicht-Tiefeninformationen 912 und/oder Gesicht-Farbinformationen 914 als Referenz Bilddaten dienen, für das biometrische Vergleichen 103.

In einem leicht zu verstehen Beispiel kann ein optisches Kartenerfassen erfolgen, z.B. mittels einer Gemalto CR5400 als Urkundenerfassungsvorrichtung 108. Auf Basis des optischen Kartenerfassens kann beispielsweise das Foto der Person, das Geburtsdatum (und damit das Alter) der Person und/oder die Gültigkeit des Ausweises 504 überprüft werden.

Das Beschränkungsvergleichen 903 kann aufweisen, das Geburtsdatum 512 zu ermitteln basierend auf den Bilddaten des Ausweises 504. Dazu kann beispielsweise ein beliebiger Prozess der Texterkennung eingesetzt werden. Ferner kann auf Basis des Geburtsdatums 512 das Alter der Person zum Zeitpunkt des Erfassens der Bilddaten 202b ermittelt werden. Dazu kann das Geburtsdatum von dem Datum zum Zeitpunkt des Erfassens der Bilddaten 202b abgezogen werden.

Das Beschränkungsvergleichen 903 kann optional aufweisen, die Gültigkeit des Ausweises 504 zu ermitteln. Wurde ermittelt, dass der Ausweis nicht gültig ist, kann ein negatives Resultat des Beschränkungsvergleichens 903 ausgegeben werden.

In einem leicht zu verstehenden Beispiel weist das Kriterium der Verkaufsbeschränkung beispielsweise ein Mindestalter auf, z.B. um das Produkt erwerben zu dürfen. Mit anderen Worten erfüllt die Person das Kriterium der Verkaufsbeschränkung, wenn diese das Mindestalter aufweist oder älter ist. Wird beispielsweise ermittelt, dass das Alter der Person gleich oder größer dem Mindestalter ist, kann das Resultat des Beschränkungsvergleichens 903 positiv sein.

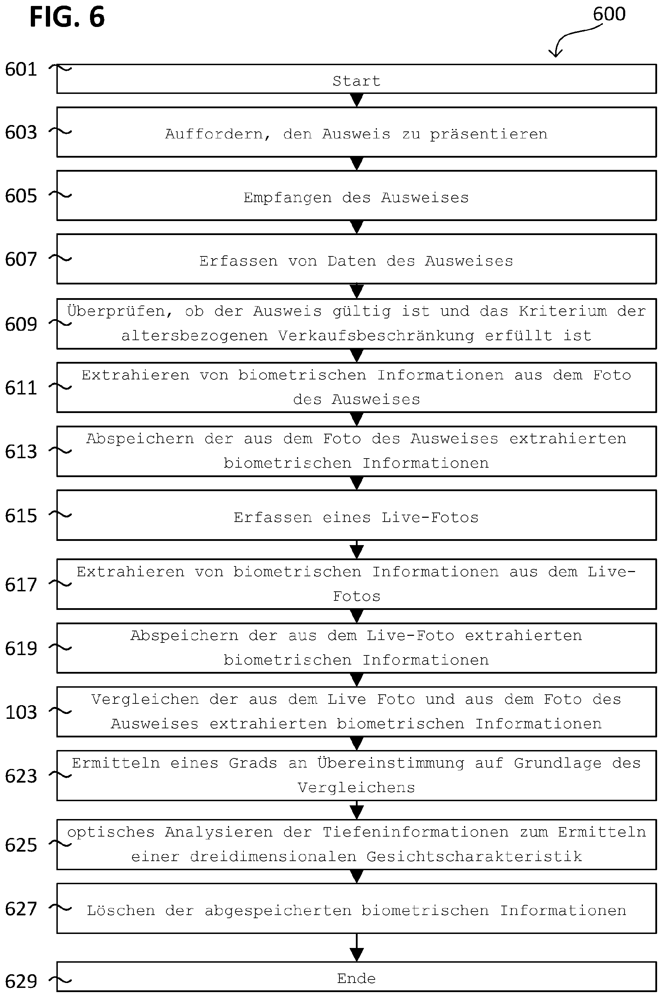

**Fig.6** veranschaulicht ein Verfahren 100 gemäß verschiedenen Ausführungsformen 600 in einem schematischen Ablaufdiagramm.

Das Verfahren 100 kann aufweisen, in 601, Start der Altersverifikation. Der Start der Altersverifikation kann erfolgen in Antwort auf das Ermitteln eines Ereignisses, welches eine Altersverifikation erfordert. Das Ereignis kann beispielsweise aufweisen, dass eine altersbezogene Verkaufsbeschränkung ermittelt 101 wurde (vgl. Fig.1), welcher das Produkt unterliegt. Das Verfahren 100 kann aufweisen, in 603, Auffordern, den Ausweis zu präsentieren. Das Auffordern, den Ausweis zu präsentieren, kann beispielsweise mittels der Informationsausgabevorrichtung 124 erfolgen, z.B. optisch und/oder akustisch.

Das Verfahren 100 kann aufweisen, in 605, Empfangen des Ausweises, beispielsweise mittels der Urkundenerfassungsvorrichtung 108. Dazu kann der Ausweis beispielsweise in die Urkundenerfassungsvorrichtung 108 eingesteckt werden.

Das Verfahren 100 kann aufweisen, in 607, Erfassen von Daten des Ausweises (z.B. einer Gültigkeit, einem Foto, einem Geburtsdatum und/oder einer Prüfsumme). Mittels der Prüfsumme kann beispielsweise eine zyklische Redundanzprüfung erfolgen.

Das Verfahren 100 (z.B. das zweite Ermitteln 105) kann aufweisen, in 609, Überprüfen, ob der Ausweis gültig ist und das Kriterium der altersbezogenen Verkaufsbeschränkung erfüllt 903 ist; in 611, Extrahieren von biometrischen Informationen aus dem Foto des Ausweises; optional in 613, Abspeichern der aus dem Foto des Ausweises extrahierten biometrischen Informationen; in 615, Erfassen eines Live-Fotos (optional mit Tiefeninformationen) der Person; in 617, Extrahieren von biometrischen Informationen aus dem Live-Foto; optional in 619, Abspeichern der aus dem Live-Foto extrahierten biometrischen Informationen.

Das Verfahren 100 (z.B. das biometrische Vergleichen 103) kann aufweisen, in 621, Vergleichen der aus dem Live-Foto und aus dem Foto des Ausweises extrahierten biometrischen Informationen; und in 623, Ermitteln eines Grads an biometrischer Übereinstimmung auf Grundlage des Vergleichens 621 (ähnlich zu 103).

Das Verfahren 100 (z.B. das zweite Ermitteln 105) kann aufweisen, optional in 625, optisches Analysieren der Tiefeninformationen zum Ermitteln einer dreidimensionalen Gesichtscharakteristik; und optional in 625, Löschen der abgespeicherten biometrischen Informationen.

Das Verfahren 100 kann aufweisen, in 629, Beenden der Altersverifizierung. Das Beenden der Altersverifizierung kann aufweisen, ein Resultat 706 der Altersverifizierung auszugeben. Das Resultat 706 der Altersverifizierung kann beispielsweise das Resultat des Vergleichens 621, das Resultat des Überprüfens 609 und/oder das Resultat des Ermittelns 623 des Grads an Übereinstimmung aufweisen.

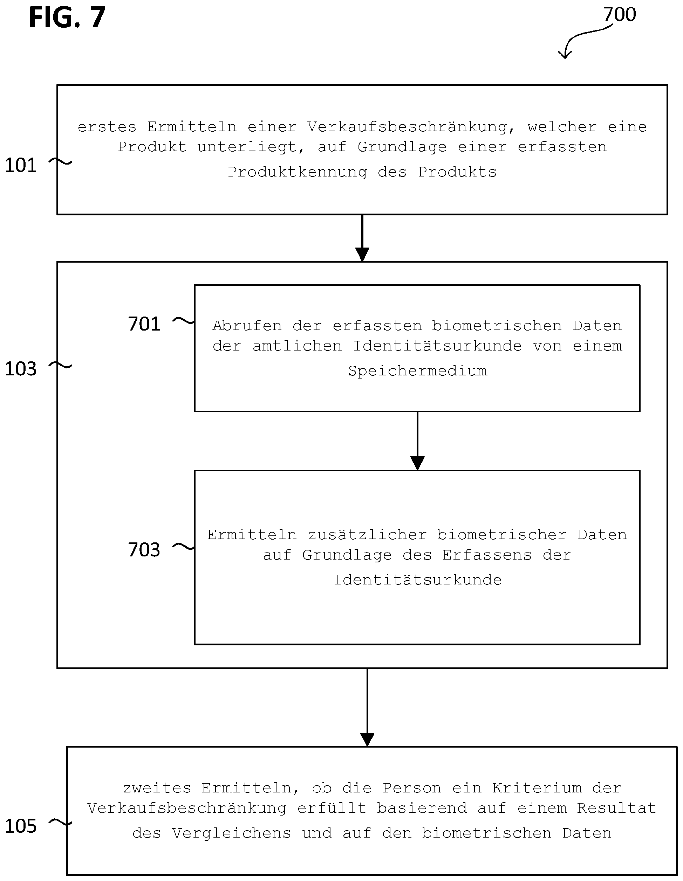

**Fig.7** veranschaulicht ein Verfahren 100 gemäß verschiedenen Ausführungsformen 700 in einem schematischen Ablaufdiagramm.

Das Verfahren 100 kann aufweisen, dass die erfassten biometrischen Daten abgespeichert werden, z.B. auf einem Speichermedium der Steuervorrichtung 106 und/oder beispielsweise einer abgespeicherten Datenbank. Mit anderen Worten können die erfassten biometrischen Daten zwischenzeitlich abgespeichert und zu einem späteren Zeitpunkt wieder abgerufen werden. Beispielsweise können die biometrischen Daten, die bei jeder Registriersitzung 202 erfasst werden, in einer Datenbank abgespeichert werden.

Dementsprechend kann das Vergleichen 103 aufweisen: Abrufen der erfassten biometrischen Daten der amtlichen Identitätsurkunde von einem Speichermedium.

Beispielsweise können, bei der ersten Benutzung des Registrierterminals 200 von einer Person, in Antwort auf eine erfolgreiche Altersverifikation die erfassten biometrischen Daten der Person in der Datenbank gespeichert werden, so dass dieser bei jeder weiteren Benutzung nicht mehr nach seinem hoheitlichen Dokument gefragt werden muss (aber kann). Dies kann optional ferner erfordern, dass die Person als lebend ermittelt worden ist (d.h. positive Lebenderkennung).

Werden zu einem späteren Zeitpunkt, in Antwort auf das Ermitteln 101 der Verkaufsbeschränkung, die Bilddaten der Person erfasst, können diese zuerst mit den abgespeicherten biometrischen Daten (wenn vorhanden) verglichen werden, z.B. mittels Abgleichs zwischen der Live-Gesichtserkennung allen bereits in der Datenbank befindlichen Einträgen.

Die Datenbank kann in analoger Weise mit biometrischen Identifikationsmerkmalen und entsprechenden Berechtigungen aus einem anderen Prozess ergänz werden. Diese können dann wiederum zu einem späteren Zeitpunkt genutzt werden.

Ein Beispiel zur Implementierung des Verfahrens 100 kann aufweisen: erstes Ermitteln 101 der Verkaufsbeschränkung 214, welcher ein Produkt unterliegt, auf Grundlage einer erfassten Produktkennung 202a des Produkts, beispielsweise indem die Person altersrestriktive Ware (Beispiel: Ü18) scannt; optionales Ausgeben einer Aufforderung an die Person, sich selbst (z.B. das Gesicht) der Erfassungsvorrichtung zu präsentieren, beispielsweise indem das Registrierterminal 200 die Person um ein "Live-Gesicht" bittet; Erfassen von Bilddaten der Person (z.B. deren Gesicht); Ermitteln biometrischer Daten der Person auf Grundlage der Bilddaten der Person, z.B. indem diese aus den Bilddaten der Person extrahiert werden; optionales Durchführen einer Lebenderkennung auf Grundlage der Bilddaten der Person; Vergleichen 103 der auf Grundlage der Bilddaten der Person ermittelten biometrischen Daten mit abgespeicherten, zuvor erfassten biometrische Daten, einer Datenbank (z.B. Ü18-Datenbank).

Ergibt das Vergleichen 103 ein positives Resultat, kann der Bezahlvorgang freigegeben werden. Damit kann beispielsweise ermöglicht werden, dass die Person das Produkt erwirbt.

Ergibt das Vergleichen 103 ein negatives Resultat und/oder weist die Datenbank keinen passenden Datensatz (auch als Eintrag bezeichnet) auf, kann das Verfahren 100 ferner Folgendes aufweisen: optionales Ausgeben einer Aufforderung an die Person, die Identitätsurkunde der Erfassungsvorrichtung zu präsentieren, beispielsweise indem das Registrierterminal 200 die Person um ein hoheitliches Dokument bittet; Erfassen der Identitätsurkunde, z.B. indem Bilddaten der Identitätsurkunde erfasst werden (z.B. Vorderseite und/oder Rückseite der Identitätsurkunde); Ermitteln 701 zusätzlicher biometrischer Daten auf Grundlage des Erfassens der Identitätsurkunde, z.B. indem diese aus den Bilddaten der Identitätsurkunde extrahiert werden; und zusätzliches Vergleichen 103 der auf Grundlage der Bilddaten der Person ermittelten biometrischen Daten mit den von der Identitätsurkunde erfassten zusätzlichen biometrische Daten.

Wird ermittelt, dass die Person das Kriterium der Verkaufsbeschränkung 214 erfüllt basierend auf den von der Identitätsurkunde erfassten biometrischen Daten, kann das zusätzliche Vergleichen 103 durchgeführt werden. Andernfalls kann mittels des Signals 905 die Registriersitzung 202 in einen Wartezustand versetzt werden, der Alarm ausgegeben werden und/oder der Bezahlvorgang blockiert werden. Anschaulich werden beispielsweise die biometrische Daten aus einem hoheitlichen Dokument extrahiert und überprüft, ob das Alter der Person über 18 ist (auch als Ü18 bezeichnet).

Ergibt das zusätzliche Vergleichen 103 ein positives Resultat, kann der Bezahlvorgang freigegeben werden. Andernfalls kann mittels des Signals 905 die Registriersitzung 202 in einen Wartezustand versetzt werden, ein Alarm ausgegeben werden und/oder der Bezahlvorgang blockiert werden.

Ergibt das zusätzliche Vergleichen 103 ein positives Resultat, können die in 703 anhand der Identitätsurkunde erfassten biometrischen Daten in der Datenbank (z.B. Ü18-Datenbank) abgespeichert werden.

Die so gebildete Datenbank enthält beispielsweise lediglich extrahierte biometrische Daten ohne Bezug zu Identitäten von Personen und/oder ohne Bilddaten. Optional können aus diesen biometrischen Daten rein durch die konzeptionelle Umsetzung mittels eines kNN keine Bilddaten, z.B. Abbildungen von Gesichtern, rekonstruiert werden. Die Datenbank bleibt also per se anonym. Allein das Vorhandensein der biometrischen Daten einer Person in einer (z.B. Ü18) Datenbank ermöglicht, ein nochmals beschleunigtes Verifizieren der Berechtigung der Person, das Produkt, das einer Verkaufsbeschränkung unterliegt (z.B. Ü18-Artikel) zu erwerben.

Die Datenbank kann in verschiedenen Ausführungsformen beispielsweise lokal auf einem Speichermedium des Registrierterminals 200 abgespeichert werden; zentral in einem Ladengeschäft auf einem Speichermedium abgespeichert werden, auf welches mehrere Registrierterminals desselben Ladengeschäfts zugreifen können; oder zentral auf einem Speichermedium abgespeichert werden, auf welches die Registrierterminals mehrerer Ladengeschäfte (z.B. der gleichen Ladenkette) zugreifen können, z.B. über ein Netzwerk.

Im Folgenden werden verschiedene Beispiele beschrieben, die sich auf das vorangehend Beschriebene und in den Figuren Dargestellte beziehen.

Beispiel 1 ist ein Registrierterminal, nämlich ein Selbstbedienungs-Registrierterminal gemäß dem Patentanspruch 1 oder ein Registrierterminal gemäß dem Patentanspruch 15, das einen Kassierer-Arbeitsplatz aufweist, das Registrierterminal unter anderem aufweisend: eine Erfassungsvorrichtung mit zumindest einem Sensor, wobei die Erfassungsvorrichtung eingerichtet ist: erste biometrische Daten (z.B. mittels Erfassens von Bilddaten) anhand einer Person an dem Selbstbedienungs-Registrierterminal zu erfassen (z.B. wenn die Person der Erfassungsvorrichtung präsentiert wird); zweite biometrische Daten anhand einer amtlichen Identitätsurkunde zu erfassen, wenn die Identitätsurkunde der Erfassungsvorrichtung präsentiert wird; und eine Produktkennung eines Produkts zu erfassen, wenn das Produkt der Erfassungsvorrichtung präsentiert wird; eine Steuervorrichtung, die eingerichtet ist zum: ersten Ermitteln einer Verkaufsbeschränkung, welcher das Produkt unterliegt, auf Grundlage der Produktkennung; Vergleichen der ersten biometrischen Daten (z.B. der Bilddaten) mit den zweiten biometrischen Daten (z.B. in Reaktion auf das erste Ermitteln); zweiten Ermitteln, ob die Person ein Kriterium der Verkaufsbeschränkung erfüllt basierend auf einem Resultat des Vergleichens und auf den zweiten biometrischen Daten.

Beispiel 2 ist das Registrierterminal (z.B. Selbstbedienungs-Registrierterminal) gemäß Beispiel 1, ferner aufweisend: Freigeben eines Bezahlvorgang-Prozesses für das Produkt, wenn die Person das Kriterium der Verkaufsbeschränkung erfüllt, ansonsten Versetzen des Bezahlvorgang-Prozesses in einen Wartezustand und/oder Ausgeben eines Alarmsignals.

Beispiel 3 ist das Registrierterminal (z.B. Selbstbedienungs-Registrierterminal) gemäß Beispiel 1 oder 2, wobei die Erfassungsvorrichtung einen Bilderfassungssensor aufweist, der eingerichtet ist, Bilddaten der Identitätsurkunde zu erfassen, welche die zweiten biometrischen Daten aufweisen.

Beispiel 4 ist das Registrierterminal (z.B. Selbstbedienungs-Registrierterminal) gemäß einem der Beispiele 1 bis 3, wobei die Erfassungsvorrichtung einen Chipkartenleser aufweist, der eingerichtet ist, die zweiten biometrischen Daten, die auf der Identitätsurkunde abgespeichert sind, auszulesen.

Beispiel 5 ist das Registrierterminal (z.B. Selbstbedienungs-Registrierterminal) gemäß einem der Beispiele 1 bis 4, wobei die Identitätsurkunde einen Lichtbildausweis aufweist, welcher beispielsweise optisch erfasst wird mittels der Erfassungsvorrichtung.

Beispiel 6 ist das Registrierterminal (z.B. Selbstbedienungs-Registrierterminal) gemäß einem der Beispiele 1 bis 5, wobei die Erfassungsvorrichtung ferner eingerichtet ist, eine Lebenderkennung auf Grundlage der ersten biometrischen Daten durchzuführen, wobei beispielsweise das zweite Ermitteln, ob die Person das Kriterium der Verkaufsbeschränkung (214) erfüllt, ferner basierend auf einem Resultat der Lebenderkennung erfolgt.

Beispiel 7 ist das Registrierterminal (z.B. Selbstbedienungs-Registrierterminal) gemäß einem der Beispiele 1 bis 6, wobei die Erfassungsvorrichtung eingerichtet ist, Bilddaten der Person zu erfassen, welche die ersten biometrischen Daten aufweisen.

Beispiel 8 ist das Registrierterminal (z.B. Selbstbedienungs-Registrierterminal) gemäß einem der Beispiele 1 bis 7, wobei die Erfassungsvorrichtung ferner eingerichtet ist, den Bilddaten der Person zugeordnete Tiefeninformationen zu erfassen, wobei die Steuervorrichtung eingerichtet ist, eine Lebenderkennung und/oder eine Gesichtserkennung auf Grundlage der Tiefeninformationen durchzuführen.

Beispiel 9 ist das Registrierterminal (z.B. Selbstbedienungs-Registrierterminal) gemäß einem der Beispiele 1 bis 8, wobei das zweite Ermitteln, ob die Person das Kriterium der Verkaufsbeschränkung erfüllt, ferner basierend auf einem Resultat der Lebenderkennung erfolgt.

Beispiel 10 ist das Registrierterminal (z.B. Selbstbedienungs-Registrierterminal) gemäß einem der Beispiele 1 bis 9, wobei das Kriterium der Verkaufsbeschränkung ein Mindestalter der Person aufweist.

Beispiel 11 ist das Registrierterminal (z.B. Selbstbedienungs-Registrierterminal) gemäß Beispiel 10, wobei das zweite Ermitteln ein Alter der Person berücksichtigt, welches auf Grundlage der ersten und/oder zweiten biometrischen Daten ermittelt wird.

Beispiel 12 ist das Registrierterminal (z.B. Selbstbedienungs-Registrierterminal) gemäß Beispiel 11, wobei das Alter der Person auf Grundlage eines Datums (z.B. Geburtsdatums) der zweiten biometrischen Daten ermittelt wird.

Beispiel 13 ist das Registrierterminal (z.B. Selbstbedienungs-Registrierterminal) gemäß einem der Beispiele 1 bis 12, wobei das Vergleichen der ersten biometrischen Daten (z.B. Bilddaten der Person) mit den zweiten biometrischen Daten aufweist, eine oder mehr als eine Gesichtserkennung durchzuführen, z.B. eine Gesichtserkennung auf Grundlage der ersten biometrischen Daten (z.B. der Bilddaten der Person) und/oder eine Gesichtserkennung auf Grundlage der zweiten biometrischen Daten.

Beispiel 14 ist das Registrierterminal (z.B. Selbstbedienungs-Registrierterminal) gemäß einem der Beispiele 1 bis 13, ferner aufweisend: eine Informationsausgabevorrichtung zum Ausgeben einer wahrnehmbaren Information; wobei die Steuervorrichtung ferner eingerichtet ist, mittels der Informationsausgabevorrichtung die wahrnehmbare Information auszugeben (z.B. auf Grundlage eines Resultats des ersten Ermittelns), welche eine Aufforderung aufweist, der Erfassungsvorrichtung die Identitätsurkunde und/oder die Person (z.B. deren Gesicht) zu präsentieren.

Beispiel 15 ist das Registrierterminal (z.B. Selbstbedienungs-Registrierterminal) gemäß einem der Beispiele 1 bis 14, wobei die Steuervorrichtung ferner eingerichtet ist, mittels der Erfassungsvorrichtung erfasste biometrische Daten (z.B. die ersten biometrischen Daten und/oder die zweiten biometrischen Daten) abzuspeichern (z.B. auf einem Speichermedium), wenn das zweite Ermitteln ergibt, dass die Person das Kriterium der Verkaufsbeschränkung erfüllt basierend auf dem Resultat des Vergleichens und auf den zweiten biometrischen Daten.

Beispiel 16 ist das Registrierterminal (z.B. Selbstbedienungs-Registrierterminal) gemäß einem der Beispiele 1 bis 15, wobei die Steuervorrichtung eingerichtet, die als zweite biometrische Daten verwendeten biometrischen Daten: aus einem Speicher auszulesen und/oder mittels der Erfassungsvorrichtung zu erfassen.

Beispiel 17 ist das Registrierterminal (z.B. Selbstbedienungs-Registrierterminal) gemäß einem der Beispiele 1 bis 16, wobei die Steuervorrichtung ferner eingerichtet ist, mittels der Erfassungsvorrichtung die zweiten biometrischen Daten anhand der amtlichen Identitätsurkunde (z.B. nur dann) zu erfassen, wenn ermittelt wird, dass keine biometrischen Daten abgespeichert sind, für welche (d.h. wenn diese als zweite biometrische Daten verwendet werden) das zweite Ermitteln ergibt, dass die Person das Kriterium der Verkaufsbeschränkung erfüllt.

Beispiel 18 ist das Registrierterminal (z.B. Selbstbedienungs-Registrierterminal) gemäß einem der Beispiele 1 bis 17, wobei die Informationsausgabevorrichtung eingerichtet ist, die mittels der Erfassungsvorrichtung erfassten ersten biometrischen Daten bzw. Bilddaten der Person anzuzeigen (z.B. als Sequenz).

Beispiel 19 ist ein Verfahren gemäß dem Patentanspruch 12, unter anderem aufweisend: erstes Ermitteln einer Verkaufsbeschränkung, welcher ein Produkt unterliegt, auf Grundlage einer erfassten Produktkennung des Produkts; Vergleichen von anhand einer Person erfassten ersten biometrischen Daten (z.B. Bilddaten) der Person mit anhand einer amtlichen Identitätsurkunde erfassten zweiten biometrischen Daten; zweites Ermitteln, ob die Person ein Kriterium der Verkaufsbeschränkung erfüllt basierend auf einem Resultat des Vergleichens und auf den zweiten biometrischen Daten.

Beispiel 20 ist eine Steuervorrichtung, welche eingerichtet ist, das Verfahren gemäß Beispiel 19 durchzuführen.

Beispiel 21 ist ein nichtflüchtiges Speichermedium, das Codesegmente aufweist, die eingerichtet sind, wenn von einem Prozessor ausgeführt, das Verfahren gemäß Beispiel 19 durchzuführen.

Beispiel 22 ist das Registrierterminal, aufweisend: eine Erfassungsvorrichtung zum Erfassen der Produktkennung, der ersten biometrischen Daten (z.B. der Bilddaten der Person) und/oder der zweiten biometrischen Daten; und die Steuervorrichtung gemäß Beispiel 20.

Beispiel 23 ist ein Terminal gemäß dem Patentanspruch 11 (z.B. ein Selbstbedienungs-Terminal), das Terminal unter anderem aufweisend: eine Erfassungsvorrichtung mit zumindest einem Sensor, wobei die Erfassungsvorrichtung eingerichtet ist: erste biometrische Daten (z.B. mittels Erfassens von Bilddaten) anhand einer Person an dem Terminal zu erfassen (z.B. wenn die Person der Erfassungsvorrichtung präsentiert wird); zweite biometrische Daten anhand einer amtlichen Identitätsurkunde zu erfassen, wenn die Identitätsurkunde der Erfassungsvorrichtung präsentiert wird; und eine Benutzereingabe zu erfassen, welche ein von dem Terminal angebotenes (z.B. physisches oder virtuelles) Produkt repräsentiert; eine Steuervorrichtung, die eingerichtet ist zum: ersten Ermitteln einer Verkaufsbeschränkung, welcher das Produkt unterliegt; Vergleichen der ersten biometrischen Daten (z.B. der Bilddaten) mit den zweiten biometrischen Daten (z.B. in Reaktion auf das erste Ermitteln); zweiten Ermitteln, ob die Person ein Kriterium der Verkaufsbeschränkung erfüllt basierend auf einem Resultat des Vergleichens und auf den zweiten biometrischen Daten.

Beispiel 24 ist das Terminal (z.B. Selbstbedienungs-Registrierterminal) gemäß Beispiel 23, welches ferner eingerichtet ist gemäß einem der Beispiele 1 bis 18.

## Patentansprüche

1. Selbstbedienungs-Registrierterminal (200), aufweisend:
• eine Erfassungsvorrichtung (152) mit zumindest einem Sensor, wobei die Erfassungsvorrichtung (152) eingerichtet ist
erste biometrische Daten (202b) anhand einer Person an dem Selbstbedienungs-Registrierterminal (200) zu erfassen;
zweite biometrische Daten (202c) anhand einer amtlichen Identitätsurkunde (504) zu erfassen, wenn die Identitätsurkunde (504) der Erfassungsvorrichtung (152) präsentiert wird;
eine Produktkennung (202a) eines Produkts zu erfassen, wenn das Produkt der Erfassungsvorrichtung (152) präsentiert wird;
• eine Steuervorrichtung (106), die eingerichtet ist zum:
ersten Ermitteln einer Verkaufsbeschränkung (214), welcher das Produkt unterliegt, auf Grundlage der Produktkennung (202a);
Vergleichen der ersten biometrischen Daten (202b) mit den zweiten biometrischen Daten (202c);
zweiten Ermitteln, ob die Person ein Kriterium der Verkaufsbeschränkung (214) erfüllt basierend auf einem Resultat des Vergleichens und auf den zweiten biometrischen Daten (202c);
• wobei die Erfassungsvorrichtung (152) ferner eingerichtet ist, Bilddaten (202b) der Person zu erfassen, welche die ersten biometrischen Daten aufweisen, und den Bilddaten (202b) der Person zugeordnete Tiefeninformationen zu erfassen,
• wobei die Steuervorrichtung (106) ferner eingerichtet ist, die Bilddaten (202b) in Segmente eines ersten Typs und in Segmente eines zweiten Typs zu unterteilen, basierend darauf, ob jeweilige Tiefenwerte der Segmente ein vorbestimmtes Kriterium erfüllen oder nicht,
• wobei die Tiefenwerte der Segmente des ersten Typs das vorbestimmte Kriterium erfüllen und die Tiefenwerte der Segmente des zweiten Typs das vorbestimmte Kriterium nicht erfüllen,
• wobei das vorbestimmte Kriterium aufweist, ob die Tiefenwerte der Segmente eine vorbestimmte Nähe zum Selbstbedienungs-Registrierterminal (200) aufweisen;
• wobei die Steuervorrichtung (106) ferner eingerichtet ist, eine Lebenderkennung und eine Gesichtserkennung auf Grundlage der Tiefeninformationen der Bilddaten durchzuführen, wobei das zweite Ermitteln, ob die Person das Kriterium der Verkaufsbeschränkung (214) erfüllt, ferner basierend auf einem Resultat der Lebenderkennung und einem Resultat der Gesichtserkennung erfolgt,
• wobei die Steuervorrichtung (106) eingerichtet ist, die Lebenderkennung ausschließlich auf Grundlage der Tiefeninformationen der Segmente des ersten Typs durchzuführen.

2. Selbstbedienungs-Registrierterminal (200) gemäß Anspruch 1, ferner aufweisend:
• Freigeben eines Bezahlvorgang-Prozesses für das Produkt, wenn die Person das Kriterium der Verkaufsbeschränkung (214) erfüllt, ansonsten
Versetzen des Bezahlvorgang-Prozesses in einen Wartezustand und/oder
Ausgeben eines Alarmsignals.

3. Selbstbedienungs-Registrierterminal (200) gemäß Anspruch 1 oder 2, wobei die Erfassungsvorrichtung (152) einen Bilderfassungssensor aufweist, der eingerichtet ist, Bilddaten der Identitätsurkunde (504) zu erfassen, welche die zweiten biometrischen Daten (202c) aufweisen.

4. Selbstbedienungs-Registrierterminal (200) gemäß einem der Ansprüche 1 bis 3, wobei die Erfassungsvorrichtung (152) einen Chipkartenleser aufweist, der eingerichtet ist, die zweiten biometrischen Daten (202c), die auf der Identitätsurkunde (504) abgespeichert sind, auszulesen.

5. Selbstbedienungs-Registrierterminal (200) gemäß einem der Ansprüche 1 bis 4, wobei die Identitätsurkunde (504) einen Lichtbildausweis aufweist.

6. Selbstbedienungs-Registrierterminal (200) gemäß einem der Ansprüche 1 bis 5, wobei die Steuervorrichtung (106) ferner eingerichtet ist, mittels der Erfassungsvorrichtung die zweiten biometrischen Daten anhand der amtlichen Identitätsurkunde zu erfassen, wenn ermittelt wird, dass keine biometrischen Daten abgespeichert sind, für welche das zweite Ermitteln ergibt, dass die Person das Kriterium der Verkaufsbeschränkung erfüllt.

7. Selbstbedienungs-Registrierterminal (200) gemäß einem der Ansprüche 1 bis 6, wobei die Informationsausgabevorrichtung eingerichtet ist, die mittels der Erfassungsvorrichtung erfassten ersten biometrischen Daten bzw. Bilddaten der Person anzuzeigen.

8. Selbstbedienungs-Registrierterminal (200) gemäß einem der Ansprüche 1 bis 7, wobei das Kriterium der Verkaufsbeschränkung (214) ein Mindestalter der Person aufweist.

9. Selbstbedienungs-Registrierterminal (200) gemäß einem der Ansprüche 1 bis 8, wobei das Vergleichen der ersten biometrischen Daten (202b) mit den zweiten biometrischen Daten (202c) aufweist, eine Gesichtserkennung durchzuführen.

10. Selbstbedienungs-Registrierterminal (200) gemäß einem der Ansprüche 1 bis 9, ferner aufweisend:
• eine Informationsausgabevorrichtung zum Ausgeben einer wahrnehmbaren Information;
• wobei die Steuervorrichtung (106) ferner eingerichtet ist, mittels der Informationsausgabevorrichtung die wahrnehmbare Information auszugeben, welche eine Aufforderung aufweist, der Erfassungsvorrichtung (152) die Identitätsurkunde (504) und/oder die Person zu präsentieren.

11. Terminal, aufweisend:
• eine Erfassungsvorrichtung mit zumindest einem Sensor, wobei die Erfassungsvorrichtung eingerichtet ist:
erste biometrische Daten anhand einer Person an dem Terminal zu erfassen;
zweite biometrische Daten anhand einer amtlichen Identitätsurkunde zu erfassen, wenn die Identitätsurkunde der Erfassungsvorrichtung präsentiert wird; und
eine Benutzereingabe zu erfassen, welche ein von dem Terminal angebotenes Produkt repräsentiert;
• eine Steuervorrichtung, die eingerichtet ist zum:
ersten Ermitteln einer Verkaufsbeschränkung, welcher das Produkt unterliegt;
Vergleichen der ersten biometrischen Daten mit den zweiten biometrischen Daten;
zweiten Ermitteln, ob die Person ein Kriterium der Verkaufsbeschränkung erfüllt basierend auf einem Resultat des Vergleichens und auf den zweiten biometrischen Daten;
• wobei die Erfassungsvorrichtung (152) ferner eingerichtet ist, Bilddaten (202b) der Person zu erfassen, welche die ersten biometrischen Daten aufweisen, und den Bilddaten (202b) der Person zugeordnete Tiefeninformationen zu erfassen,
• wobei die Steuervorrichtung (106) ferner eingerichtet ist, die Bilddaten (202b) in Segmente eines ersten Typs und in Segmente eines zweiten Typs zu unterteilen, basierend darauf, ob jeweilige Tiefenwerte der Segmente ein vorbestimmtes Kriterium erfüllen oder nicht,
• wobei die Tiefenwerte der Segmente des ersten Typs das vorbestimmte Kriterium erfüllen und die Tiefenwerte der Segmente des zweiten Typs das vorbestimmte Kriterium nicht erfüllen,
• wobei das vorbestimmte Kriterium aufweist, ob die Tiefenwerte der Segmente eine vorbestimmte Nähe zum Selbstbedienungs-Registrierterminal (200) aufweisen;
• wobei die Steuervorrichtung (106) ferner eingerichtet ist, eine Lebenderkennung und eine Gesichtserkennung auf Grundlage der Tiefeninformationen der Bilddaten durchzuführen, wobei das zweite Ermitteln, ob die Person das Kriterium der Verkaufsbeschränkung (214) erfüllt, ferner basierend auf einem Resultat der Lebenderkennung und einem Resultat der Gesichtserkennung erfolgt,
• wobei die Steuervorrichtung (106) eingerichtet ist, die Lebenderkennung ausschließlich auf Grundlage der Tiefeninformationen der Segmente des ersten Typs durchzuführen.

12. Verfahren (100), aufweisend:
• erstes Ermitteln (101) einer Verkaufsbeschränkung (214), welcher ein Produkt unterliegt, auf Grundlage einer erfassten Produktkennung (202a) des Produkts;
• Vergleichen (103) von anhand einer Person erfassten ersten biometrischen Daten (202b) der Person mit anhand einer amtlichen Identitätsurkunde (504) erfassten zweiten biometrischen Daten (202c);
• zweites Ermitteln (105), ob die Person ein Kriterium der Verkaufsbeschränkung (214) erfüllt basierend auf einem Resultat des Vergleichens und auf den zweiten biometrischen Daten (202c);
• Unterteilen die Bilddaten (202b) in Segmente eines ersten Typs und in Segmente eines zweiten Typs basierend darauf, ob jeweilige Tiefenwerte der Segmente ein vorbestimmtes Kriterium erfüllen oder nicht,
• wobei die Tiefenwerte der Segmente des ersten Typs das vorbestimmte Kriterium erfüllen und die Tiefenwerte der Segmente des zweiten Typs das vorbestimmte Kriterium nicht erfüllen,
• wobei das vorbestimmte Kriterium aufweist, ob die Tiefenwerte der Segmente eine vorbestimmte Nähe zum Selbstbedienungs-Registrierterminal (200) aufweisen;
• Durchführen einer Lebenderkennung und einer Gesichtserkennung auf Grundlage von Tiefeninformationen, welche die ersten biometrischen Daten aufweisenden Bilddaten (202b) der Person zugeordnet sind,
• wobei die Lebenderkennung ausschließlich auf Grundlage der Tiefeninformationen der Segmente des ersten Typs durchgeführt wird;
• wobei das zweite Ermitteln, ob die Person das Kriterium der Verkaufsbeschränkung (214) erfüllt, ferner auf einem Resultat der Lebenderkennung und einem Resultat der Gesichtserkennung basiert.

13. Steuervorrichtung (106), welche eingerichtet ist, das Verfahren (100) gemäß Anspruch 12 durchzuführen.

14. Nichtflüchtiges Speichermedium, das Codesegmente aufweist, die eingerichtet sind, wenn von einem Prozessor ausgeführt, das Verfahren (100) gemäß Anspruch 12 durchzuführen.

15. Registrierterminal (200), aufweisend:
• einen Kassierer-Arbeitsplatz;
• eine Erfassungsvorrichtung (152) mit zumindest einem Sensor, wobei die Erfassungsvorrichtung (152) eingerichtet ist
erste biometrische Daten (202b) anhand einer Person an dem Registrierterminal (200) zu erfassen;
zweite biometrische Daten (202c) anhand einer amtlichen Identitätsurkunde (504) zu erfassen, wenn die Identitätsurkunde (504) der Erfassungsvorrichtung (152) präsentiert wird;
eine Produktkennung (202a) eines Produkts zu erfassen, wenn das Produkt der Erfassungsvorrichtung (152) präsentiert wird;
• eine Steuervorrichtung (106), die eingerichtet ist zum:
ersten Ermitteln einer Verkaufsbeschränkung (214), welcher das Produkt unterliegt, auf Grundlage der Produktkennung (202a);
Vergleichen der ersten biometrischen Daten (202b) mit den zweiten biometrischen Daten (202c);
zweiten Ermitteln, ob die Person ein Kriterium der Verkaufsbeschränkung (214) erfüllt basierend auf einem Resultat des Vergleichens und auf den zweiten biometrischen Daten (202c);
• wobei die Erfassungsvorrichtung (152) ferner eingerichtet ist, Bilddaten (202b) der Person zu erfassen, welche die ersten biometrischen Daten aufweisen, und den Bilddaten (202b) der Person zugeordnete Tiefeninformationen zu erfassen,
• wobei die Steuervorrichtung (106) ferner eingerichtet ist, die Bilddaten (202b) in Segmente eines ersten Typs und in Segmente eines zweiten Typs zu unterteilen, basierend darauf, ob jeweilige Tiefenwerte der Segmente ein vorbestimmtes Kriterium erfüllen oder nicht,
• wobei die Tiefenwerte der Segmente des ersten Typs das vorbestimmte Kriterium erfüllen und die Tiefenwerte der Segmente des zweiten Typs das vorbestimmte Kriterium nicht erfüllen,
• wobei das vorbestimmte Kriterium aufweist, ob die Tiefenwerte der Segmente eine vorbestimmte Nähe zum Selbstbedienungs-Registrierterminal (200) aufweisen;
• wobei die Steuervorrichtung (106) ferner eingerichtet ist, eine Lebenderkennung und eine Gesichtserkennung auf Grundlage der Tiefeninformationen der Bilddaten durchzuführen, wobei das zweite Ermitteln, ob die Person das Kriterium der Verkaufsbeschränkung (214) erfüllt, ferner basierend auf einem Resultat der Lebenderkennung und einem Resultat der Gesichtserkennung erfolgt,
• wobei die Steuervorrichtung (106) eingerichtet ist, die Lebenderkennung ausschließlich auf Grundlage der Tiefeninformationen der Segmente des ersten Typs durchzuführen.

## Claims

1. Self-service registration terminal (200) comprising:
• a capture device (152) having at least one sensor, the capture device (152) being configured
to capture first biometric data (202b) from a person at the self-service registration terminal (200);
to capture second biometric data (202c) from an official identity document (504) when the identity document (504) is presented to the capture device (152);
to capture a product identifier (202a) of a product when the product is presented to the capture device (152);
• a control device (106) configured to:
firstly determine a sales restriction (214) to which the product is subject, on the basis of the product identifier (202a);
compare the first biometric data (202b) with the second biometric data (202c);
secondly determine whether the person meets a criterion of the sales restriction (214) based on a result of the comparison and on the second biometric data (202c);
• the capture device (152) also being configured to capture image data (202b) relating to the person that comprise the first biometric data, and to capture depth information associated with the image data (202b) relating to the person,
• the control device (106) also being configured to divide the image data (202b) into segments of a first type and into segments of a second type based on whether or not respective depth values of the segments meet a predetermined criterion,
• the depth values of the segments of the first type meeting the predetermined criterion and the depth values of the segments of the second type not meeting the predetermined criterion,
• the predetermined criterion comprising whether the depth values of the segments have a predetermined proximity to the self-service registration terminal (200);
• the control device (106) also being configured to perform liveness detection and facial recognition on the basis of the depth information of the image data, the second determination of whether the person meets the criterion of the sales restriction (214) also being performed based on a result of the liveness detection and a result of the facial recognition,
• the control device (106) being configured to perform the liveness detection exclusively on the basis of the depth information of the segments of the first type.

2. Self-service registration terminal (200) according to Claim 1, also comprising:
• approval of a payment process for the product if the person meets the criterion of the sales restriction (214), otherwise
transfer of the payment process to a wait state and/or output of an alarm signal.

3. Self-service registration terminal (200) according to Claim 1 or 2, the capture device (152) comprising an image capture sensor configured to capture image data relating to the identity document (504) that comprise the second biometric data (202c).

4. Self-service registration terminal (200) according to one of Claims 1 to 3, the capture device (152) comprising a chip card reader configured to read the second biometric data (202c) stored on the identity document (504).

5. Self-service registration terminal (200) according to one of Claims 1 to 4, the identity document (504) comprising a photo ID.

6. Self-service registration terminal (200) according to one of Claims 1 to 5, the control device (106) also being configured to use the capture device to capture the second biometric data from the official identity document when it is determined that no biometric data for which the result of the second determination is that the person meets the criterion of the sales restriction are stored.

7. Self-service registration terminal (200) according to one of Claims 1 to 6, the information output device being configured to display the first biometric data or image data relating to the person that have been captured by means of the capture device.

8. Self-service registration terminal (200) according to one of Claims 1 to 7, the criterion of the sales restriction (214) comprising a minimum age of the person.

9. Self-service registration terminal (200) according to one of Claims 1 to 8, the comparison of the first biometric data (202b) with the second biometric data (202c) comprising performing facial recognition.

10. Self-service registration terminal (200) according to one of Claims 1 to 9, also comprising:
• an information output device for outputting perceptible information;
• the control device (106) also being configured to use the information output device to output the perceptible information, which comprises a prompt to present the identity document (504) and/or the person to the capture device (152).

11. Terminal comprising:
• a capture device having at least one sensor, the capture device being configured:
to capture first biometric data from a person at the terminal;
to capture second biometric data from an official identity document when the identity document is presented to the capture device; and
to capture a user input representing a product offered by the terminal;
• a control device configured to:
firstly determine a sales restriction to which the product is subject;
compare the first biometric data with the second biometric data;
secondly determine whether the person meets a criterion of the sales restriction based on a result of the comparison and on the second biometric data;
• the capture device (152) also being configured to capture image data (202b) relating to the person that comprise the first biometric data, and to capture depth information associated with the image data (202b) relating to the person,
• the control device (106) also being configured to divide the image data (202b) into segments of a first type and into segments of a second type based on whether or not respective depth values of the segments meet a predetermined criterion,
• the depth values of the segments of the first type meeting the predetermined criterion and the depth values of the segments of the second type not meeting the predetermined criterion,
• the predetermined criterion comprising whether the depth values of the segments have a predetermined proximity to the self-service registration terminal (200);
• the control device (106) also being configured to perform liveness detection and facial recognition on the basis of the depth information of the image data, the second determination of whether the person meets the criterion of the sales restriction (214) also being performed based on a result of the liveness detection and a result of the facial recognition,
• the control device (106) being configured to perform the liveness detection exclusively on the basis of the depth information of the segments of the first type.

12. Method (100) comprising:
• firstly determining (101) a sales restriction (214) to which a product is subject, on the basis of a captured product identifier (202a) of the product;
• comparing (103) first biometric data (202b) relating to the person that have been captured from a person with second biometric data (202c) captured from an official identity document (504);
• secondly determining (105) whether the person meets a criterion of the sales restriction (214) based on a result of the comparison and on the second biometric data (202c) ;
• dividing the image data (202b) into segments of a first type and into segments of a second type based on whether or not respective depth values of the segments meet a predetermined criterion,
• the depth values of the segments of the first type meeting the predetermined criterion and the depth values of the segments of the second type not meeting the predetermined criterion,
• the predetermined criterion comprising whether the depth values of the segments have a predetermined proximity to the self-service registration terminal (200);
• performing liveness detection and facial recognition on the basis of depth information associated with image data (202b) relating to the person that comprise the first biometric data,
• the liveness detection being performed exclusively on the basis of the depth information of the segments of the first type;
• the second determination of whether the person meets the criterion of the sales restriction (214) also being based on a result of the liveness detection and a result of the facial recognition.

13. Control device (106) configured to carry out the method (100) according to Claim 12.

14. Non-volatile storage medium that comprises code segments configured so as, when executed by a processor, to carry out the method (100) according to Claim 12.

15. Registration terminal (200) comprising:
• a cashier's workstation;
• a capture device (152) having at least one sensor, the capture device (152) being configured
to capture first biometric data (202b) from a person at the registration terminal (200);
to capture second biometric data (202c) from an official identity document (504) when the identity document (504) is presented to the capture device (152);
to capture a product identifier (202a) of a product when the product is presented to the capture device (152);
• a control device (106) configured to:
firstly determine a sales restriction (214) to which the product is subject, on the basis of the product identifier (202a);
compare the first biometric data (202b) with the second biometric data (202c);
secondly determine whether the person meets a criterion of the sales restriction (214) based on a result of the comparison and on the second biometric data (202c);
• the capture device (152) also being configured to capture image data (202b) relating to the person that comprise the first biometric data, and to capture depth information associated with the image data (202b) relating to the person,
• the control device (106) also being configured to divide the image data (202b) into segments of a first type and into segments of a second type based on whether or not respective depth values of the segments meet a predetermined criterion,
• the depth values of the segments of the first type meeting the predetermined criterion and the depth values of the segments of the second type not meeting the predetermined criterion,
• the predetermined criterion comprising whether the depth values of the segments have a predetermined proximity to the self-service registration terminal (200);
• the control device (106) also being configured to perform liveness detection and facial recognition on the basis of the depth information of the image data, the second determination of whether the person meets the criterion of the sales restriction (214) also being performed based on a result of the liveness detection and a result of the facial recognition,
• the control device (106) being configured to perform the liveness detection exclusively on the basis of the depth information of the segments of the first type.

## Revendications

1. Terminal d'enregistrement libre-service (200) comportant :
• un dispositif de détection (152) doté d'au moins un capteur, le dispositif de détection (152) étant conçu pour
détecter des premières données biométriques (202b) à partir d'une personne présente au terminal d'enregistrement libre-service (200) ;
détecter des secondes données biométriques (202c) à partir d'un document d'identité (504) officiel lorsque le document d'identité (504) est présenté au dispositif de détection (152) ;
détecter un identifiant de produit (202a) d'un produit lorsque le produit est présenté au dispositif de détection (152) ;
• un dispositif de commande (106) qui est conçu pour :
déterminer, en premier lieu, une restriction de vente (214) à laquelle le produit est soumis, sur la base de l'identifiant de produit (202a) ;
comparer les premières données biométriques (202b) aux secondes données biométriques (202c) ;
déterminer, en second lieu, si la personne satisfait à un critère de restriction de vente (214) sur la base d'un résultat de la comparaison et des secondes données biométriques (202c) ;
• dans lequel le dispositif de détection (152) est en outre conçu pour détecter des données d'image (202b) de la personne, lesquelles comportent les premières données biométriques, et pour détecter des informations de profondeur associées aux données d'image (202b) de la personne,
• dans lequel le dispositif de commande (106) est en outre conçu pour subdiviser les données d'image (202b) en segments d'un premier type et en segments d'un second type, selon que des valeurs de profondeur respectives des segments satisfont ou non à un critère prédéterminé,
• dans lequel les valeurs de profondeur des segments du premier type satisfont au critère prédéterminé et les valeurs de profondeur des segments du second type ne satisfont pas au critère prédéterminé,
• dans lequel le critère prédéterminé comprend le fait de savoir si les valeurs de profondeur des segments présentent une proximité prédéterminée par rapport au terminal d'enregistrement libre-service (200) ;
• dans lequel le dispositif de commande (106) est en outre conçu pour effectuer une détection de présence et une reconnaissance faciale sur la base des informations de profondeur des données d'image, la seconde détermination du fait de savoir si la personne satisfait au critère de restriction de vente (214) s'effectuant en outre sur la base d'un résultat de la détection de présence et d'un résultat de la reconnaissance faciale,
• dans lequel le dispositif de commande (106) est conçu pour effectuer la détection de présence exclusivement sur la base des informations de profondeur des segments du premier type.

2. Terminal d'enregistrement libre-service (200) selon la revendication 1, comprenant en outre :
• l'autorisation d'un processus de paiement pour le produit lorsque la personne satisfait au critère de restriction de vente (214), sinon
la mise en attente du processus de paiement et/ou l'émission d'un signal d'alarme.

3. Terminal d'enregistrement libre-service (200) selon la revendication 1 ou 2, dans lequel le dispositif de détection (152) comporte un capteur de détection d'image qui est conçu pour détecter des données d'image du document d'identité (504), lesquelles comportent les secondes données biométriques (202c).

4. Terminal d'enregistrement libre-service (200) selon l'une des revendications 1 à 3, dans lequel le dispositif de détection (152) comporte un lecteur de carte à puce qui est conçu pour lire les secondes données biométriques (202c) stockées sur le document d'identité (504).

5. Terminal d'enregistrement libre-service (200) selon l'une des revendications 1 à 4, dans lequel le document d'identité (504) comprend une pièce d'identité avec photo.

6. Terminal d'enregistrement libre-service (200) selon l'une des revendications 1 à 5, dans lequel le dispositif de commande (106) est en outre conçu pour détecter les secondes données biométriques à partir du document d'identité officiel au moyen du dispositif de détection lorsqu'il est déterminé qu'aucune donnée biométrique n'est stockée pour laquelle la seconde détermination indique que la personne satisfait au critère de restriction de vente.

7. Terminal d'enregistrement libre-service (200) selon l'une des revendications 1 à 6, dans lequel le dispositif de sortie d'informations est conçu pour afficher les premières données biométriques ou respectivement les données d'image de la personne détectées au moyen du dispositif de détection.

8. Terminal d'enregistrement libre-service (200) selon l'une des revendications 1 à 7, dans lequel le critère de restriction de vente (214) comporte un âge minimum de la personne.

9. Terminal d'enregistrement libre-service (200) selon l'une des revendications 1 à 8, dans lequel la comparaison des premières données biométriques (202b) aux secondes données biométriques (202c) comprend l'exécution d'une reconnaissance faciale.

10. Terminal d'enregistrement libre-service (200) selon l'une des revendications 1 à 9, comprenant en outre :
• un dispositif de sortie d'informations pour émettre une information perceptible ;
• dans lequel le dispositif de commande (106) est en outre conçu pour émettre, au moyen du dispositif de sortie d'informations, l'information perceptible qui comporte une demande de présentation du document d'identité (504) et/ou de la personne au dispositif de détection (152).

11. Terminal, comprenant :
• un dispositif de détection doté d'au moins un capteur, le dispositif de détection étant conçu pour :
détecter des premières données biométriques à partir d'une personne présente au terminal ;
détecter des secondes données biométriques à partir d'un document d'identité officiel lorsque le document d'identité est présenté au dispositif de détection ; et
détecter une saisie d'utilisateur représentant un produit proposé par le terminal ;
• un dispositif de commande, qui est conçu pour :
déterminer, en premier lieu, une restriction de vente à laquelle le produit est soumis ;
comparer les premières données biométriques aux secondes données biométriques ;
déterminer, en second lieu, si la personne satisfait à un critère de restriction de vente sur la base d'un résultat de la comparaison et des secondes données biométriques ;
• dans lequel le dispositif de détection (152) est en outre conçu pour détecter des données d'image (202b) de la personne, lesquelles comportent les premières données biométriques, et pour détecter des informations de profondeur associées aux données d'image (202b) de la personne,
• dans lequel le dispositif de commande (106) est en outre conçu pour subdiviser les données d'image (202b) en segments d'un premier type et en segments d'un second type, selon que des valeurs de profondeur respectives des segments satisfont ou non à un critère prédéterminé,
• dans lequel les valeurs de profondeur des segments du premier type satisfont au critère prédéterminé et les valeurs de profondeur des segments du second type ne satisfont pas au critère prédéterminé,
• dans lequel le critère prédéterminé comprend le fait de savoir si les valeurs de profondeur des segments présentent une proximité prédéterminée par rapport au terminal d'enregistrement libre-service (200) ;
• dans lequel le dispositif de commande (106) est en outre conçu pour effectuer une détection de présence et une reconnaissance faciale sur la base des informations de profondeur des données d'image, la seconde détermination du fait de savoir si la personne satisfait au critère de restriction de vente (214) s'effectuant en outre sur la base d'un résultat de la détection de présence et d'un résultat de la reconnaissance faciale,
• dans lequel le dispositif de commande (106) est conçu pour effectuer la détection de présence exclusivement sur la base des informations de profondeur des segments du premier type.

12. Procédé (100), comprenant les étapes suivantes :
• déterminer, en premier lieu (101), une restriction de vente (214) à laquelle un produit est soumis sur la base d'un identifiant de produit (202a) détecté du produit ;
• comparer (103) des premières données biométriques (202b) de la personne, détectées à partir d'une personne, à des secondes données biométriques (202c) détectées à partir d'un document d'identité (504) officiel ;
• déterminer, en second lieu (105), si la personne satisfait à un critère de restriction de vente (214) sur la base d'un résultat de la comparaison et des secondes données biométriques (202c) ;
• subdiviser les données d'image (202b) en segments d'un premier type et en segments d'un second type selon que des valeurs de profondeur respectives des segments satisfont ou non à un critère prédéterminé,
• dans lequel les valeurs de profondeur des segments du premier type satisfont au critère prédéterminé et les valeurs de profondeur des segments du second type ne satisfont pas au critère prédéterminé,
• dans lequel le critère prédéterminé comprend le fait de savoir si les valeurs de profondeur des segments présentent une proximité prédéterminée par rapport au terminal d'enregistrement libre-service (200) ;
• effectuer une détection de présence et une reconnaissance faciale sur la base d'informations de profondeur associées à des données d'image (202b) de la personne, comportant les premières données biométriques,
• dans lequel la détection de présence est effectuée exclusivement sur la base des informations de profondeur des segments du premier type ;
• dans lequel la seconde détermination du fait de savoir si la personne satisfait au critère de restriction de vente (214) est en outre basée sur un résultat de la détection de présence et sur un résultat de la reconnaissance faciale.

13. Dispositif de commande (106) qui est conçu pour mettre en œuvre le procédé (100) selon la revendication 12.

14. Support de stockage non volatil comportant des segments de code qui sont conçus, lorsqu'ils sont exécutés par un processeur, pour mettre en œuvre le procédé (100) selon la revendication 12.

15. Terminal d'enregistrement (200), comprenant :
• un poste de travail d'un caissier;
• un dispositif de détection (152) doté d'au moins un capteur, le dispositif de détection (152) étant conçu pour
détecter des premières données biométriques (202b) à partir d'une personne présente au terminal d'enregistrement (200) ;
détecter des secondes données biométriques (202c) à partir d'un document d'identité (504) officiel lorsque le document d'identité (504) est présenté au dispositif de détection (152) ;
détecter un identifiant de produit (202a) d'un produit lorsque le produit est présenté au dispositif de détection (152) ;
• un dispositif de commande (106) qui est conçu pour :
déterminer, en premier lieu, une restriction de vente (214) à laquelle le produit est soumis, sur la base de l'identifiant de produit (202a) ;
comparer les premières données biométriques (202b) aux secondes données biométriques (202c) ;
déterminer, en second lieu, si la personne satisfait à un critère de restriction de vente (214) sur la base d'un résultat de la comparaison et des secondes données biométriques (202c) ;
• dans lequel le dispositif de détection (152) est en outre conçu pour détecter des données d'image (202b) de la personne, lesquelles comportent les premières données biométriques, et pour détecter des informations de profondeur associées aux données d'image (202b) de la personne,
• dans lequel le dispositif de commande (106) est en outre conçu pour subdiviser les données d'image (202b) en segments d'un premier type et en segments d'un second type, selon que des valeurs de profondeur respectives des segments satisfont ou non à un critère prédéterminé,
• dans lequel les valeurs de profondeur des segments du premier type satisfont au critère prédéterminé et les valeurs de profondeur des segments du second type ne satisfont pas au critère prédéterminé,
• dans lequel le critère prédéterminé comprend le fait de savoir si les valeurs de profondeur des segments présentent une proximité prédéterminée par rapport au terminal d'enregistrement libre-service (200) ;
• dans lequel le dispositif de commande (106) est en outre conçu pour effectuer une détection de présence et une reconnaissance faciale sur la base des informations de profondeur des données d'image, la seconde détermination du fait de savoir si la personne satisfait au critère de restriction de vente (214) s'effectuant en outre sur la base d'un résultat de la détection de présence et d'un résultat de la reconnaissance faciale,
• dans lequel le dispositif de commande (106) est conçu pour effectuer la détection de présence exclusivement sur la base des informations de profondeur des segments du premier type.
